# EUROPEAN PATENT SPECIFICATION

(11) **EP 2 009 325 B1**
(45) Date of publication and mention of the grant of the patent: **14.07.2010**
(21) Application number: 07791916.5
(22) Date of filing: 03.08.2007
(51) Int. Cl.: F16H 49/00, F16H 48/12

(54) **MAGNETIC POWER TRANSMISSION DEVICE**
MAGNETENERGIEÜBERTRAGUNGSVORRICHTUNG
DISPOSITIF DE TRANSMISSION DE PUISSANCE MAGNETIQUE

(30) Priority: 04.08.2006 JP 2006213905
(43) Date of publication of application: 31.12.2008
(73) Proprietor: Honda Motor Co., Ltd., Tokyo 107-8556 (JP)
(72) Inventor: ABE, Noriyuki, Saitama 351-0193 (JP); AKUTSU, Shigemitsu, Saitama 351-0193 (JP)
(74) Representative: Rupp, Christian
(86) International application number: PCT/JP2007/065242
(87) International publication number: WO 2008/016135

(56) References cited:
- WO-A-2004/005760
- DE-A1- 3 246 122
- JP-A- 59 023 155
- JP-A- 2006 105 210
- LEENDERS P C: "MAGNETISCHE TANDWIELEN" 1 October 1989 (1989-10-01), PT ELECTROTECHNIEK, ELEKTRONICA, (NIRIA) STAM TIJDSCHRIFTEN B.V. RIJSWIJK, NL, PAGE(S) 46 , XP000070740 * the whole document *

## Description

### [Field of the Invention]

The present invention relates to a magnetic power transmission system for transmitting a driving force between a plurality of members by magnetic forces.

### [Background Art]

Conventionally, as a magnetic power transmission system of this kind, one disclosed in Patent Literature 1 is known. This magnetic power transmission system is comprised of a plurality of magnetic gears and a system body. Each magnetic gear includes a magnetic disk formed of a magnetic material, an annular magnetic tooth ring mounted to a surface of the magnetic disk using an adhesive, and a rotating shaft press-fitted into a central portion of the magnetic disk. The rotating shaft is rotatably supported by the system body. The magnetic tooth ring is an assembly of a planar and annular arrangement of a large number of magnetic teeth each formed by a permanent magnet and arranged such that the magnetic teeth are different in polarity between each adjacent two of them. Further, each magnetic tooth has a radiation curve-like shape, such as a shape of an involute curve.

In the magnetic power transmission system, a pair of magnetic gears are arranged such that surfaces thereof on the magnetic tooth ring side are opposed to each other, and respective portions of the surfaces of the magnetic tooth rings of the magnetic gears overlap with each other with a predetermined distance between the magnetic tooth rings. A magnetic force acts between the overlapping portions, whereby torque is transmitted between the pair of magnetic gears. Since torque is thus transmitted by the magnetic force, compared with a power transmission system arranged to transmit torque by mechanical contact, the above magnetic power transmission system is advantageous in that no lubricating structure is necessary, and there is no fear of occurrence of backlash or generation of dust at contact portions.

[Patent Literature 1] Japanese Laid-Open Patent Publication (Kokai) No. 2005-114162.
JP Patent Publication No. 59 023155 which represents the closest prior art discloses how to effectively utilize the force of nature by use of a magnet and by simultaneous combination use of repulsion and attraction. Since a fixed magnet on the lateral wall side and a pole inversion magnet make contact with each other at polarities different from each other, an inner N-pole and S- pole are depolarized, and only an outer S-pole and N-pole are independently in a repulsion relation. A fixed magnet and a pole inversion magnet on the rotary shaft side are also positioned in the relation in that the attraction is exerted only between the two outer poles thereof. In a position, attraction between poles is exerted on the upper, and simultaneously, repulsion between poles on the lower, resulting in producing a repulsion force. In a position, a 4-attraction force, being total attraction less total repulsion, is exerted, in a position C, a 4-repulsion force is exerted in like manner, in a position D, a 4-attraction force is exerted in like manner, and this causes said forces, in order, to turn a rotary shaft. The larger the number of such magnets disposed are, the larger the number of the poles, which contact at different polarities and are depolarized, and the number of poles, which contact each other at the same polarity and are independent, become, and both repulsion and attraction become large, resulting in enabling energy-saving.

### [Disclosure of the Invention]

According to the above-described conventional magnetic power transmission system, torque is transmitted between the pair of the magnetic gears by the magnetic force acting on the overlapping portions of the magnetic tooth rings, so that the ratio of a portion contributing to torque transmission to a total surface of each magnetic tooth ring is so small that it is impossible to efficiently secure an area of a magnetic path. This results in a low torque transmitting efficiency and a small torque transmitting capacity. Furthermore, the magnetic teeth have such a complicated shape as makes manufacturing of the same troublesome and time-consuming, which increases manufacturing cost of the magnetic power transmission system.

The present invention has been made to provide a solution to the above-described problems, and an object thereof is to provide a magnetic power transmission system which is capable of improving the power transmitting efficiency and the power transmitting capacity and reducing manufacturing costs of the system, while maintaining the advantageous effects of the power transmission performed by magnetic forces.

To attain the object, the invention as claimed in claim 1 provides a magnetic power transmission system 1, 1B to 1H, comprising a first movable member (outer rotor 11, inner rotor 12, left and right outer rotors 21, left and right inner rotors 22, small-diameter rotor 31, large-diameter rotor 32, left rotor 41, right rotor 42, outer slider 51, inner slider 52) including a first magnetic pole row which is formed by a plurality of first magnetic poles (e.g. permanent magnets 11c, 12c, 21c, 22c, 31c, 32c, 41c, 42c, 51c, 52c in the embodiment (the same applies hereinafter in this section)) arranged at approximately equal intervals in a predetermined direction, each adjacent two of the first magnetic poles having polarities different from each other, the first movable member being movable along the predetermined direction, a second movable member (outer rotor 11, inner rotor 12, left and right outer rotors 21, left and right inner rotors 22, small-diameter rotor 31, large-diameter rotor 32, left rotor 41, right rotor 42, outer slider 51, inner slider 52) including a second magnetic pole row which is formed by a plurality of second magnetic poles (permanent magnets 11c, 12c, 21c, 22c, 31c, 32c, 41c, 42c, 51c, 52c) arranged at approximately equal intervals in the predetermined direction, each adjacent two of the second magnetic poles having polarities different from each other, and is arranged in an opposed relation to the first magnetic pole row, the second movable member being relatively movable with respect to the first movable member along the predetermined direction, a third movable member (outer rotor 11, inner rotor 12, left and right outer rotors 21, left and right inner rotors 22, small-diameter rotor 31, large-diameter rotor 32, left rotor 41, right rotor 42, outer slider 51, inner slider 52) including a third magnetic pole row which is formed by a plurality of third magnetic poles (permanent magnets 11c, 12c, 21c, 22c, 31c, 32c, 41c, 42c, 51c, 52c) arranged at approximately equal intervals in the predetermined direction, each adjacent two of the third magnetic poles having polarities different from each other, the third movable member moving relative to the first movable member in an interlocked manner to thereby move along the predetermined direction, a fourth movable member (outer rotor 11, inner rotor 12, left and right outer rotors 21, left and right inner rotors 22, small-diameter rotor 31, large-diameter rotor 32, left rotor 41, right rotor 42, outer slider 51, inner slider 52) including a fourth magnetic pole row which is formed by a plurality of fourth magnetic poles (permanent magnets 11c, 12c, 21c, 22c, 31c, 32c, 41c, 42c, 51c, 52c) arranged at approximately equal intervals in the predetermined direction, each adjacent two of the fourth magnetic poles having polarities different from each other, and is arranged in an opposed relation to the third magnetic pole row, the fourth movable member moving relative to the second movable member in an interlocked manner to thereby move along the predetermined direction, a fifth movable member (intermediate rotor 13, left and right intermediate rotors 23, intermediate-diameter rotor 33, intermediate rotor 43, intermediate slider 53) including a first soft magnetic material element row which is formed by a plurality of first soft magnetic material elements (left soft magnetic material elements 13d, 23d, 33d, 53d, and outer soft magnetic material elements 43d, or right soft magnetic material elements 13e, 23e, 33e, 53e, and inner soft magnetic material elements 43e) arranged at approximately equal intervals in the predetermined direction, and is arranged between the first magnetic pole row and the second magnetic pole row, the fifth movable member being arranged in a manner relatively movable with respect to the first movable member and the second movable member along the predetermined direction, and a sixth movable member (intermediate rotor 13, left and right intermediate rotors 23, intermediate-diameter rotor 33, intermediate rotor 43, intermediate slider 53) including a second soft magnetic material element row which is formed by a plurality of second soft magnetic material elements (right soft magnetic material elements 13e, 23e, 33e, 53e, and inner soft magnetic material elements 43e, or left soft magnetic material elements 13d, 23d, 33d, 53d, and outer soft magnetic material elements 43d) arranged at approximately equal intervals in the predetermined direction, and is arranged between the third magnetic pole row and the fourth magnetic pole row, the sixth movable member moving relative to the fifth movable member in an interlocked manner to thereby move along the predetermined direction, wherein when each the first magnetic pole and each the second magnetic pole are in a first opposed position opposed to each other, each the third magnetic pole and each the fourth magnetic pole are in a second opposed position opposed to each other; when each the first magnetic pole and each the second magnetic pole in the first opposed position have polarities different from each other, each the third magnetic pole and each the fourth magnetic pole in the second opposed position have polarities identical to each other; when each the first magnetic pole and each the second magnetic pole in the first opposed position have polarities identical to each other, each the third magnetic pole and each the fourth magnetic pole in the second opposed position have polarities different from each other, and wherein when each the first magnetic pole and each the second magnetic pole are in the first opposed position, if each the first soft magnetic material element is in a position between the first magnetic pole and the second magnetic pole, each the second soft magnetic material element is in a position between two pairs of third magnetic poles and fourth magnetic poles adjacent to each other in the predetermined direction, and if each the second soft magnetic material element is in a position between the third magnetic pole and the fourth magnetic pole, each the first soft magnetic material element is in a position between two pairs of first magnetic poles and second magnetic poles which are adjacent to each other in the predetermined direction.

According to this magnetic power transmission system, the second movable member and the fifth movable member are arranged to be relatively movable along the predetermined direction with respect to the first movable member and to the first and second movable members, respectively, and the fourth movable member and the sixth movable member are arranged to be movable along the predetermined direction with respect to the third movable member and to the third and fourth movable members, respectively. Furthermore, the third and fourth movable members move relative to the first and second movable members, respectively, in an interlocked manner, and the sixth movable member moves relative to the fifth movable member in an interlocked manner, and therefore if any one of the first to sixth movable members is fixed to a predetermined member arranged to be immovable other than the first to sixth movable members, an interlocked one of the movable member interlocked with the fixed movable member is also immovably fixed (it should be noted that throughout the specification, "to move along a predetermined direction" is intended to mean to move in both one direction and a direction opposite to the one direction, along a predetermined direction, as in the case where "to move along a left-right direction" means to move in both leftward and rightward directions). Further, "the third movable member moves relative to the first movable member in an interlocked manner" is intended to mean that the first movable member and the third movable member are in a mutually interlocked relationship in which each moves according to the other).

First, a description will be given of a case where the first movable member is fixed, and the driving force is input to the second movable member, whereby the second movable member is moved e.g. along the predetermined direction in one direction thereof. In this case, the first movable member is fixed whereby the third movable member interlocked therewith is also fixed, and in a manner interlocked with the second movable member, the fourth movable member also moves. Before the start of the motion of the second and fourth movable members, in a state where each first magnetic pole and each second magnetic pole in the first opposed position have polarities different from each other, if each first soft magnetic element is between the first magnetic pole and the second magnetic pole, magnetic lines of force (hereinafter referred to as "the first magnetic lines of force") are generated between these first magnetic poles, first soft magnetic material elements, and second magnetic poles, and the length of the first magnetic lines of force becomes shortest, and the total amounts of magnetic flux thereof become largest.

On the other hand, in the state where the first soft magnetic element is between the first magnetic pole and the second magnetic pole, each third magnetic pole and each fourth magnetic pole in the second opposed position have the same polarity, and each second soft magnetic material element is in a position between two pairs of third magnetic poles and fourth magnetic poles adjacent to each other in the predetermined direction, so that magnetic lines of force (hereinafter referred to as "the second magnetic lines of force") generated between the third magnetic poles, the second soft magnetic material elements, and the fourth magnetic poles have a large degree of bend thereof, approximately the maximum length, and approximately the minimum total amounts of magnetic flux (it should be noted that throughout the present specification, "the first magnetic pole and the second magnetic pole are in a position opposed to each other" is not limited to that the respective centers of the two poles are in the same position in the predetermined direction, but includes that the respective centers of the two poles are in a positional relationship in which they are slightly displaced from each other).

From the above state, when the second movable member starts to be moved in one direction by the driving force, the degree of bend of the first magnetic line of force increases. In general, the magnetic line of force has a characteristic that when bent, it generates a magnetic force acting to shorten the length thereof, and therefore when the first magnetic line of force is bent as described above, a magnetic force acting on the first soft magnetic material element becomes larger as the degree of bend of the first magnetic line of force is larger, and as the total amount of magnetic flux thereof is larger. More specifically, the magnetic force acting on the first soft magnetic material element has a characteristic that it is determined depending on the synergistic action of the degree of bend of the first magnetic line of force and the total amount of magnetic flux thereof.

Therefore, when each first soft magnetic material element starts to move from between each first magnetic pole and each second magnetic pole, the length of the first magnetic line of force is short with a large total amount of magnetic flux thereof, and the first magnetic line of force starts to be bent, so that a strong magnetic force acts on the first soft magnetic material element by the synergistic action of the degree of bend of the first magnetic line of force and the total amount of magnetic flux thereof, whereby the fifth movable member is driven in the same direction as the moving direction of the second movable member. On the other hand, when the second movable member starts to move as described above, the fourth movable member moves in a manner interlocked with the second movable member, whereby each fourth magnetic pole moves away from the second opposed position in which it is opposed to each third magnetic pole having the same polarity, to move toward each third magnetic pole which is adjacent to each third magnetic pole having the same polarity, and has a polarity different from that of the fourth magnetic pole. In accordance with this motion, second magnetic lines of force are generated between the third magnetic poles, the second soft magnetic material elements, and the fourth magnetic poles. Although the degree of bend of each second magnetic line of force is large, the total amount of magnetic flux thereof is small, so that a relatively weak magnetic force acts on the second movable member by the synergistic action thereof. This drives the six movable member in the same direction as the moving direction of the fourth movable member.

Then, when the second movable member further moves, although the degree of bend of each first magnetic line of force increases, the total amount of magnetic flux thereof decreases, so that the magnetic force acting on the first soft magnetic material element decreases by the synergistic action of them to reduce the driving force of the fifth movable member. When each first magnetic pole moves to the first opposed position opposed to each second magnetic pole having the same polarity, each first soft magnetic material element comes to be between two pairs of first magnetic poles and second magnetic poles adjacent to each other in the predetermined direction. Accordingly, although the degree of bend of the first magnetic line of force is large, the total amount of magnetic flux thereof becomes approximately minimum, and the synergistic action of them makes the magnetic force acting on the first soft magnetic material element approximately weakest, so that the driving force acting on the fifth movable member becomes approximately smallest.

On the other hand, when the second movable member moves as described above, the fourth movable member moves in a manner interlocked with second movable member, and each fourth magnetic pole moves such that it becomes closer to each third magnetic pole having a different polarity. This causes each second magnetic line of force to be made smaller in the degree of bend thereof but larger in the total amount of magnetic flux so that the magnetic force acting on the second soft magnetic material element is increased by the synergistic action of them, to increase the driving force of the sixth movable member. When each third magnetic pole moves to a location in the vicinity of the second opposed position in which it is opposed to each fourth magnetic pole having a polarity different from the polarity thereof, the second magnetic line of force becomes largest in the total amount of magnetic flux thereof, and is bent by a motion of the second soft magnetic material element following the fourth magnetic pole with a slight velocity lag. As a result, the synergistic action of them makes the magnetic force acting on each second soft magnetic material element approximately strongest, which makes the driving force acting on the sixth movable member approximately largest.

As described above, when the second movable member further moves in one direction from the state in which the driving force acting on the fifth movable member is almost minimum, and at the same time the driving force acting on the sixth movable member is almost maximum, inversely to the above, the first magnetic lines of force decrease in the degree of bend thereof, and increase in the total amounts of magnetic flux thereof, so that the synergistic action of them makes stronger the magnetic forces acting on the first soft magnetic material elements to increase the driving force of the fifth movable member. On the other hand, the second magnetic lines of force increase in the degree of bend thereof, and decrease in the total amounts of magnetic flux thereof, so that the synergistic action of them weakens the magnetic forces acting on the second soft magnetic material elements, and lowers the driving force of the sixth movable member.

As described above, the fifth and sixth movable members are driven, along with the motion of the second movable member, while alternately repeating a state in which the driving force acting on the fifth movable member increases and the driving force acting on the sixth movable member decreases and a sate in which the driving force acting on the fifth movable member decreases and the driving force acting on the sixth movable member increases, so that it is possible to transmit the driving force input to the second movable member to the fifth and sixth movable members. Further, the fourth movable member is provided such that it moves relative to the second movable member in an interlocked manner, and hence even when the driving force is input to the fourth movable member, the driving force can be transmitted to the fifth and sixth movable members, as described above.

Furthermore, while each second magnetic pole of the second movable member moves from a first opposed position opposed to each first magnetic pole having a polarity different from the polarity thereof to a first opposed position opposed to each first magnetic pole having the same polarity, each first soft magnetic material element moves from the first opposed position to a position between two pairs of first magnetic poles and second magnetic poles adjacent to each other in the predetermined direction. Therefore, the fifth movable member moves in a state more decelerated than the second movable member. Similarly, while each fourth magnetic pole of the fourth movable member moves from a second opposed position in which it is opposed to each third magnetic pole having a polarity different from the polarity thereof, to a second opposed position in which it is opposed to each third magnetic pole which is adjacent to the third magnetic pole and has the same polarity, each second soft magnetic material element moves from the second opposed position to a position between two pairs of third magnetic poles and fourth magnetic poles adjacent to each other in the predetermined direction. Therefore, the sixth movable member moves in a state more decelerated than the fourth movable member. That is, the driving force input to the second movable member or the fourth movable member can be transmitted to the fifth and sixth movable members in a decelerated state.

Next, a description will be given of a case where inversely to the above, the second movable member is fixed, and the driving force is input to the first movable member. In this case, for the aforementioned reason, the fourth movable member is also fixed, and the third movable member is also moved in a manner interlocked with motion of the first movable member driven by the driving force. Then, the fifth and sixth movable members are driven along with the motions of the first movable member and the third movable member, as described above, while alternately repeating a state in which the driving force acting on the fifth movable member is increased and the driving force acting on the sixth movable member is decreased and a state in which the driving force acting on the fifth movable member is decreased and the driving force acting on the sixth movable member is increased. As a result, the driving force input to the first movable member can be transmitted to the fifth and sixth movable members. Further, as described hereinabove, the fifth movable member is more decelerated than the first movable member, and the sixth movable member as well is more decelerated than the third movable member, so that the driving force input to the first movable member or the third movable member can be transmitted to the fifth and sixth movable members in a decelerated state.

Then, a description will be given of a case where the fifth movable member is fixed, and the driving force is input to the first movable member. In this case, for the aforementioned reason, the sixth movable member is also fixed, and the third movable member also moves in a manner interlocked with the motion of the first movable member. Before the start of the motion of the first movable member, when each first magnetic pole and each second magnetic pole having the same polarity are in the first opposed position, and each first soft magnetic material element is in a position between two pairs of first magnetic poles and second magnetic poles adjacent to each other, as described above, the degree of bend of each first magnetic line of force is large and the length thereof is approximately maximum, so that the total amount of magnetic flux thereof is approximately minimum.

From this state, when the first movable member starts to move in one direction along the predetermined direction, the first magnetic pole of the first movable member starts to move such that it becomes closer to the first soft magnetic material element, and at the same time becomes closer to the second magnetic pole of the second movable member having a polarity different from that of the first magnetic pole, adjacent to the second magnetic pole of the second movable member having the same polarity. In accordance with the motion of the first magnetic pole, the first magnetic line of force is changed to make the length thereof shorter and the total amount of magnetic flux thereof larger, while making the degree of bend thereof considerably large. As a result, a relatively strong magnetic force acts on each second magnetic pole by the synergistic action of the total amount of magnetic flux of the first magnetic line of force and the degree of bend thereof, whereby the second movable member is driven such that it becomes closer to the first movable member. In a manner interlocked with this, the fourth movable member is also driven such that it becomes closer to the third movable member. That is, the second movable member is driven in a direction opposite to the moving direction of the first movable member, and at the same time the fourth movable member is also driven in a direction opposite to the moving direction of the third movable member.

Then, as the first magnetic poles become still closer to the first soft magnetic material elements, the second magnetic poles also move such that they becomes closer to the first soft magnetic material elements, due to magnetic forces generated by the first magnetic lines of force. When each first magnetic pole moves to a position in which it becomes closest to a first soft magnetic material element, the first magnetic pole is brought to the first opposed position in which it is opposed to the second magnetic pole different in polarity with the first soft magnetic material element positioned therebetween. In this state, the second soft magnetic material element is in a position between two pairs of third magnetic poles and fourth magnetic poles adjacent to each other.

From this state, when the first movable member further moves, each third magnetic pole of the third movable member becomes closer to a second soft magnetic material element, and at the same time moves such that it becomes closer to a fourth magnetic pole of the fourth movable member having a polarity different from that of the third magnetic pole, adjacent to the fourth magnetic pole of the fourth movable member having the same magnetic pole. In accordance with the motion of the third magnetic pole, the second magnetic line of force is changed to make the length thereof shorter and the total amount of magnetic flux thereof larger, while making the degree of bend thereof considerably large. As a result, a relatively strong magnetic force acts on each fourth magnetic pole by the synergistic action of the total amount of magnetic flux of the second magnetic line of force and the degree of bend thereof, whereby the fourth movable member is driven such that it becomes closer to the third movable member. In a manner interlocked with this, the second movable member is also driven such that it becomes closer to the first movable member. That is, the fourth movable member is driven in a direction opposite to the moving direction of the third movable member, and at the same time the second movable member is also driven in a direction opposite to the moving direction of the first movable member.

As described above, along with the motions of the first and third movable members, the second and the fourth movable members are driven in directions opposite to the moving directions of the first movable member and the third movable member, while alternately repeating states in which the driving force acts on the second movable member and the fourth movable member, respectively, so that it is possible to transmit a driving force input to the first movable member to the second movable member and the fourth movable member. Further, the third movable member is arranged such that it moves relative to the first movable member in an interlocked manner, and therefore even when a driving force is input to the third movable member, the driving force can be transmitted to the second movable member and the fourth movable member. Furthermore, when each first magnetic pole of the first movable member moves from a position in which it is opposed to a second magnetic pole having a polarity different from the polarity thereof to a position in which it is opposed to a second magnetic pole having the same polarity with the first soft magnetic material element positioned therebetween, the second magnetic pole of the second movable member also moves the same distance as the distance over which the first magnetic pole moves. Therefore, the first movable member and the second movable member move at the same speed, and along with the motions thereof, the third movable member and the fourth movable member also move at the same speed, so that it is possible to transmit the driving force input to the first movable member to the fourth movable member at the same speed.

As described hereinabove, according to the magnetic power transmission system, if any one of the first to sixth movable members is fixed and a driving force is input to another one not interlocked with the fixed one, for example, if the first movable member is fixed and a driving force is input to the second movable member, the driving force can be transmitted to the fifth and sixth movable members via magnet forces. During the process, magnetic paths can be formed using all the first soft magnetic material elements of the fifth movable member, all the second soft magnetic material elements of the sixth movable member, and the first to fourth magnetic poles of the first to fourth movable members which generate magnetic lines of force between themselves and the soft magnetic material elements, and therefore compared with the conventional magnetic power transmission system which forms magnetic paths using only part of magnetic poles, it is possible to improve the power transmitting efficiency and the power transmitting capacity, while maintaining the advantageous effects obtained by performing power transmission via magnetic forces.

On the other hand, also when a driving force is input to the fifth movable member or the sixth movable member in a state in which none of the first to sixth movable members are fixed, by using the above-described action of the magnetic lines of force, it is possible to transmit the driving force to the first magnetic poles of the first movable member and the second magnetic poles of the second movable member via the first soft magnetic material elements, and transmit the driving force to the third magnetic poles of the third movable member and the fourth magnetic poles of the fourth movable member via the second soft magnetic material elements. More specifically, the driving force input to the fifth movable member or the sixth movable member can be transmitted by dividing the driving force into part transmitted to the first movable member or the third movable member, and part transmitted to the second movable member or the fourth movable member. During the process as well, as described above, magnetic paths can be formed using all the first soft magnetic material elements of the fifth movable member, all the second soft magnetic material elements of the sixth movable member, and the first to fourth magnetic poles of the first to fourth movable members which generate magnetic lines of force between themselves and these soft magnetic material elements, and therefore compared with the conventional magnetic power transmission system which forms magnetic paths using only part of magnetic poles, it is possible to improve the power transmitting efficiency and the power transmitting capacity.

In addition to that, also when a driving force is input to the first movable member and the second movable member in the state in which none of the first to sixth movable members are fixed, by using the above-described action of the magnetic lines of force, it is possible to transmit the driving force to the first soft magnetic material elements via the first magnetic poles of the first movable member and the second magnetic poles of the second movable member, and to the second soft magnetic material elements via the third magnetic poles of the third movable member and the fourth magnetic poles of the fourth movable member. More specifically, the resultant force of the driving forces input to the first movable member and the second movable member, respectively, can be transmitted to the fifth movable member or the sixth movable member. Also in doing this, for the above-described reason, it is possible to improve the power transmitting efficiency and the power transmitting capacity.

The invention as claimed in claim 2 is a magnetic power transmission system 1, 1C to 1H as claimed in claim 1, wherein the first movable member and the third movable member are integrally formed with each other as a seventh movable member (outer rotor 11 or inner rotor 12, small-diameter rotor 31 or large-diameter rotor 32, left rotor 41 or right rotor 42, outer slider 51 or inner slider 52), the second movable member and the fourth movable member being integrally formed with each other as an eighth movable member (inner rotor 12 or outer rotor 11, large-diameter rotor 32 or small-diameter rotor 31, right rotor 42 or left rotor 41, inner slider 52 or outer slider 51), the fifth movable member and the sixth movable member being integrally formed with each other as a ninth movable member (intermediate rotor 13, intermediate-diameter rotor 33, intermediate rotor 43, intermediate slider 53).

According to this magnetic power transmission system, it is possible to realize a system having the aforementioned advantageous effects by three movable members. Therefore, compared with the case in which the six movable members are used, the number of component parts can be reduced, thereby making it possible to reduce manufacturing costs of the system.

The invention as claimed in claim 3 is a magnetic power transmission system 1H as claimed in claim 2, wherein the seventh to ninth movable members are formed by three sliders (outer slider 51, inner slider 52, intermediate slider 53) relatively slidable with respect to each other, respectively.

According to this magnetic power transmission system, it is possible to transmit a driving force input to one of the sliders to one or both of the other two sliders by magnetic forces, thereby making it possible to realize a magnetic power transmission system for performing linear power transmission.

The invention as claimed in claim 4 is a magnetic power transmission system 1, 1C to 1G as claimed in claim 2, wherein the seventh to ninth movable members are formed by three concentric rotors (outer rotor 11, inner rotor 12, intermediate rotor 13, small-diameter rotor 31, large-diameter rotor 32, intermediate-diameter rotor 33, left rotor 41, right rotor 42, intermediate rotor 43) rotatable relative to each other, respectively, the plurality of first to fourth magnetic poles and the plurality of first and second soft magnetic material elements being set to be equal in number to each other.

According to this magnetic power transmission system, torque input to one rotor can be transmitted to one or both of the remaining two rotors via magnetic forces, whereby it is possible to realize a magnetic power transmission system for performing torque transmission. Further, since the plurality of first to fourth magnetic poles and the plurality of first and second soft magnetic material elements are set to be equal in number to each other, it is possible to form magnetic paths by efficiently using all the opposed surfaces of the magnetic poles and the soft magnetic material elements, thereby making it possible to more efficiently secure the areas of magnetic paths for passing magnetic lines of force. As a result, it is possible to further improve the torque transmission efficiency and the torque transmitting capacity.

The invention as claimed in claim 5 is a magnetic power transmission system 1, 1C to 1H as claimed in any one of claims 2 to 4, wherein one of the seventh to ninth movable members (outer rotor 11, inner rotor 12, intermediate rotor 13, small-diameter rotor 31, large-diameter rotor 32, intermediate-diameter rotor 33, left rotor 41, right rotor 42, intermediate rotor 43, outer slider 51, inner slider 52, intermediate slider 53) is arranged to be immovable.

According to this magnetic power transmission system, when the seventh movable member or the eighth movable member is arranged to be immovable, as described above, it is possible to transmit a driving force input to the eighth movable member or the seventh movable member to the ninth movable member in a decelerated state, and transmit a driving force input to the ninth movable member to the eighth movable member or the seventh movable member in an accelerated state. Further, when the ninth movable member is arranged to be immovable, as described above, it is possible to transmit the driving force input to the eighth movable member or the seventh movable member to the seventh movable member or the eighth movable member as a driving force in a direction opposite to the direction of the input driving force.

The invention as claimed in claim 6 is a magnetic power transmission system 1C to 1E as claimed in any one of claims 2 to 5, further comprising a magnetic force-changing device (actuator 17, short-circuit member 18) for changing magnetic forces acting on the seventh to ninth movable members (outer rotor 11, inner rotor 12, intermediate rotor 13).

According to this magnetic power transmission system, the magnetic forces acting on the seventh to ninth movable members are changed by the magnetic force-changing device, and hence it is possible to change the capability of transmitting a driving force between the seventh to ninth movable members.

### [Brief Description of the Drawings]

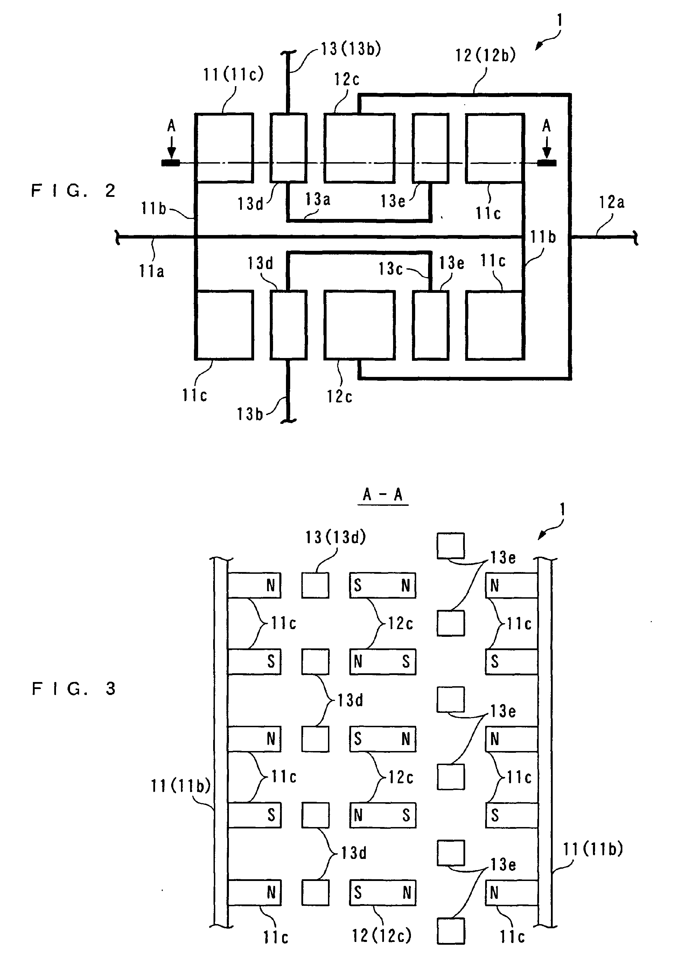

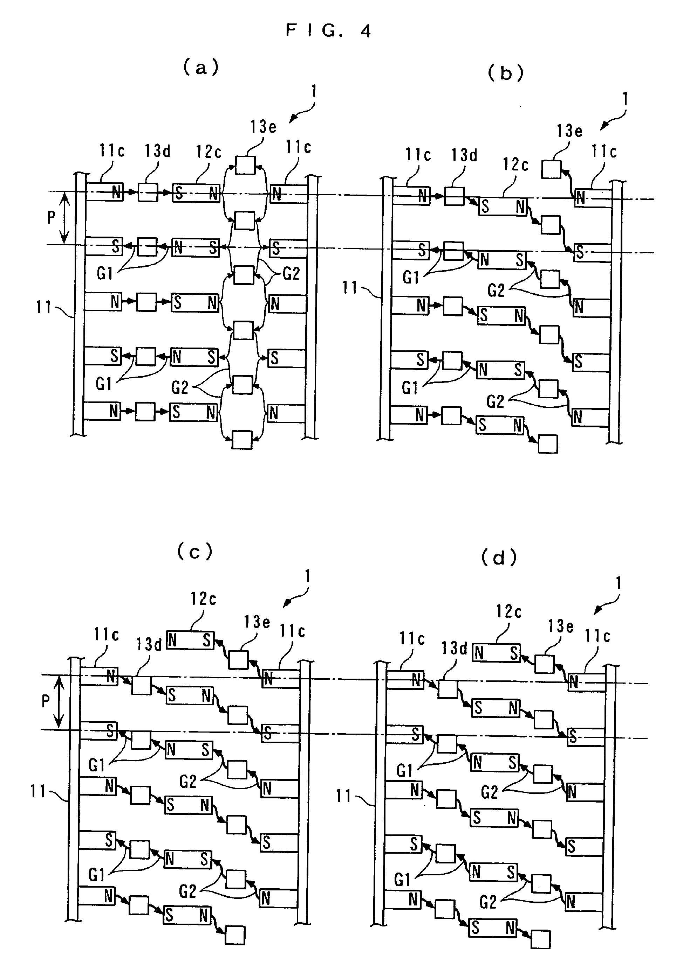

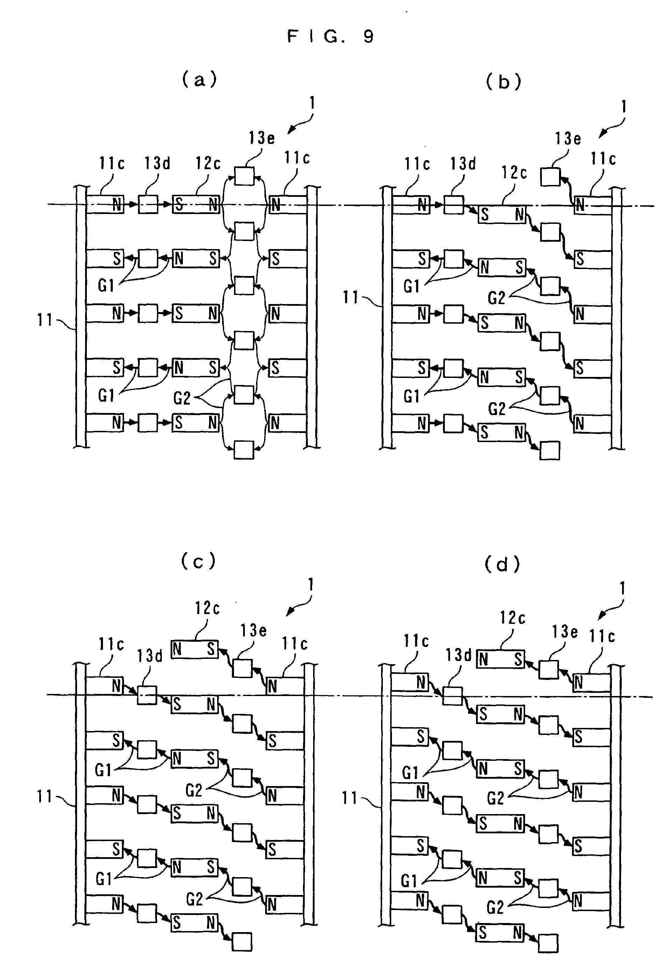

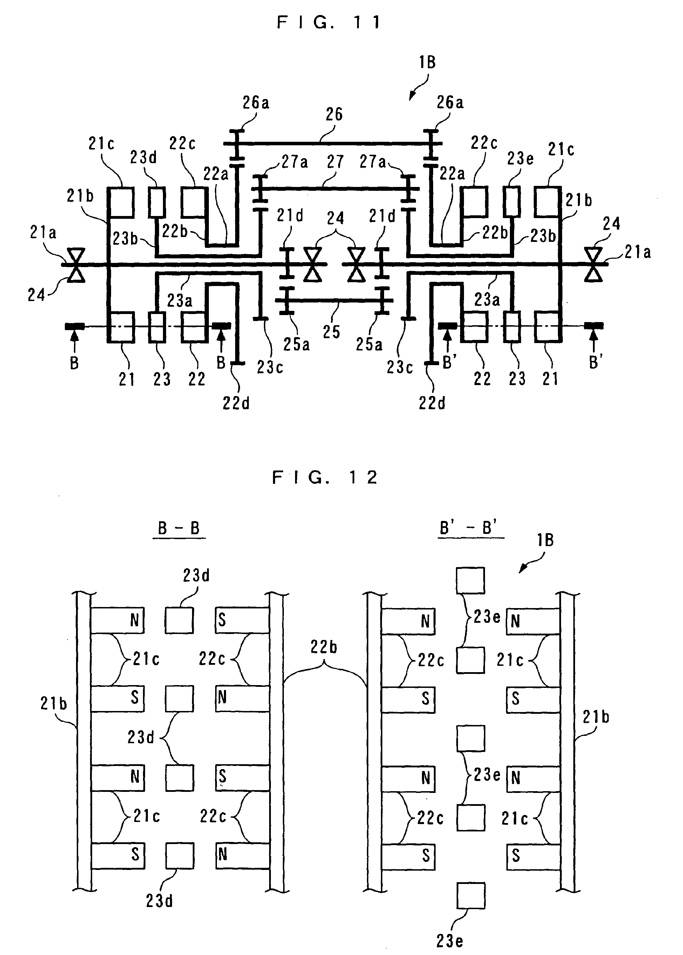

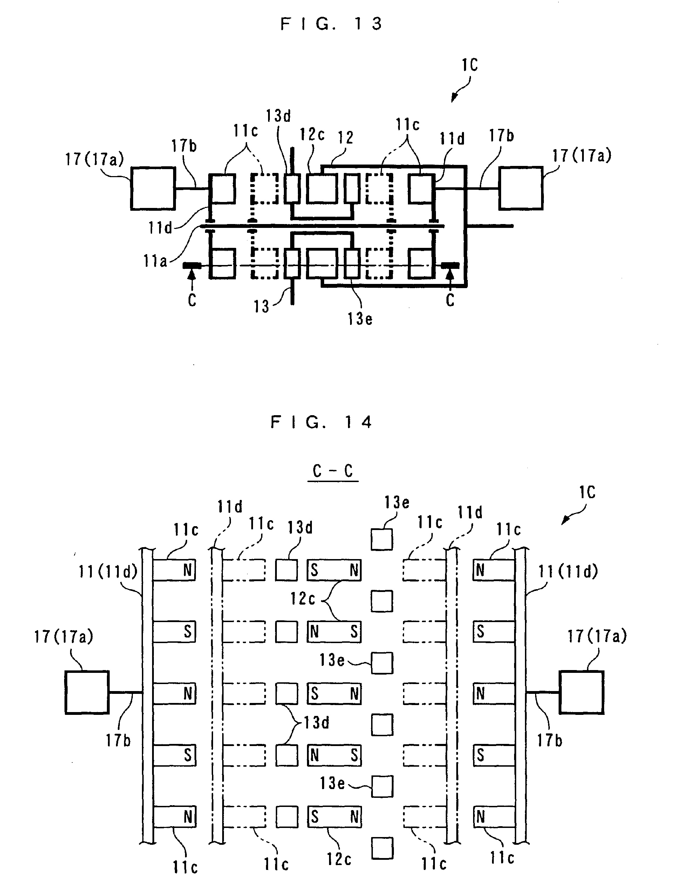

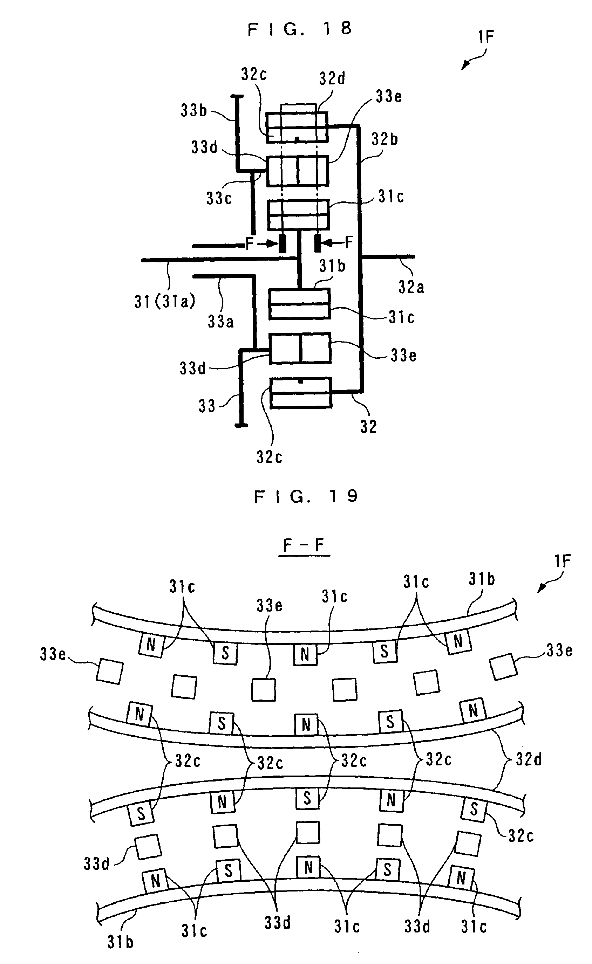

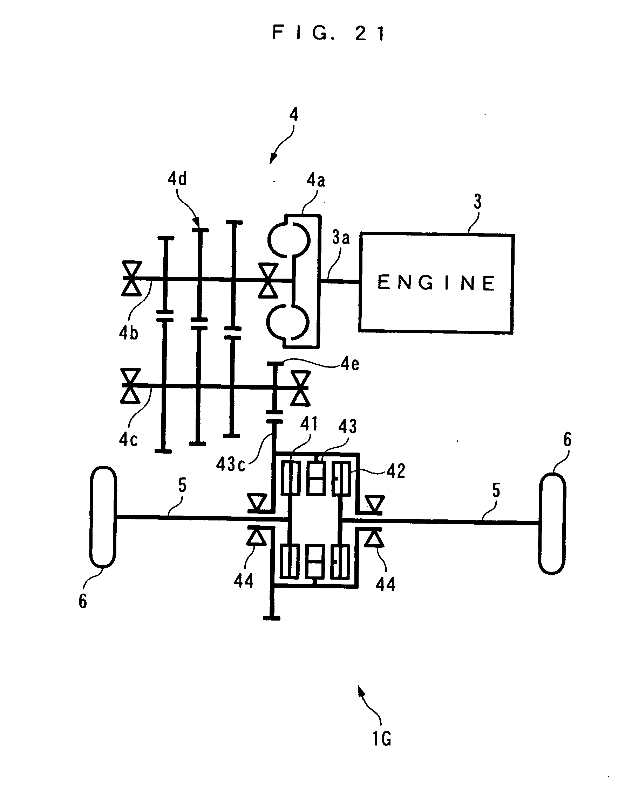

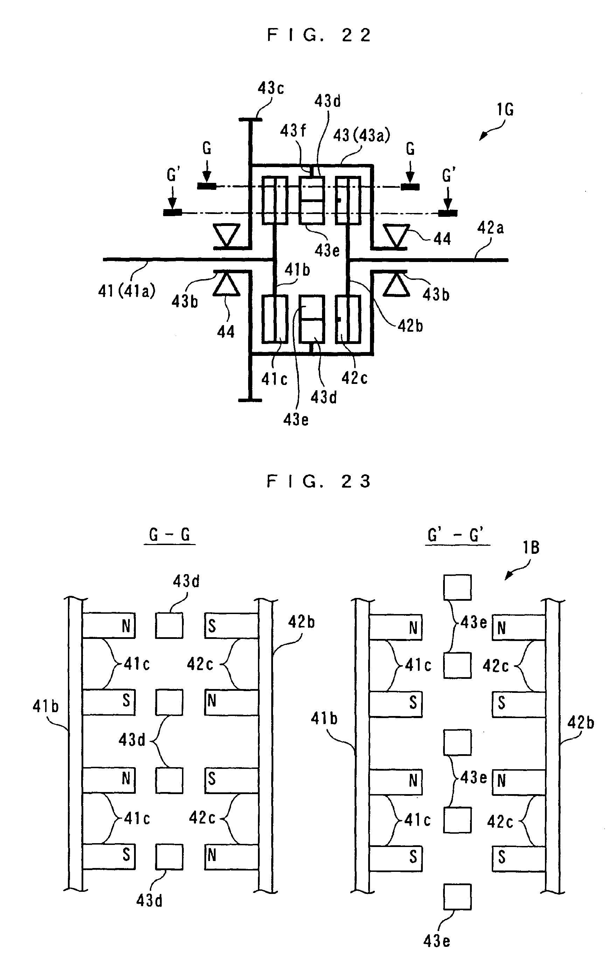

[FIG. 1]
   A skeleton diagram schematically showing the arrangement of a magnetic power transmission system according to a first embodiment of the present invention and a drive system of a vehicle to which is applied the magnetic power transmission system.
[FIG. 2]
   A skeleton diagram schematically showing essential components of the magnetic power transmission system.
[FIG. 3]
   A development view of part of a cross-section taken on line A-A of FIG. 2 along the circumferential direction.
[FIG. 4]
   A diagram which is useful in explaining operations carried out by the magnetic power transmission system when an outer rotor is fixed and torque is input to an inner rotor.
[FIG. 5]
   A diagram which is useful in explaining operations following those in FIG. 4.
[FIG. 6]
   A diagram showing magnetic circuits formed during operation of the magnetic power transmission system.
[FIG. 7]
   A diagram showing torque transmitted to an intermediate rotor during operation of the magnetic power transmission system.
[FIG. 8]
   Velocity diagrams each representing the rotational speed of three rotors, in respective cases of (a) in which the outer rotor is fixed, and torque is input to the inner rotor; (b) in which the inner rotor is fixed, and torque is input to the outer rotor; (c) in which the intermediate rotor is fixed, torque is input to the inner rotor; and (d) in which all the rotors are rotating.
[FIG. 9]
   A diagram which is useful in explaining operations carried out by the magnetic power transmission system when the intermediate rotor is fixed and torque is input to the inner rotor.
[FIG. 10]
   A diagram which is useful in explaining operations following those in FIG. 9.
[FIG. 11]
   A skeleton diagram schematically showing the arrangement of a magnetic power transmission system according to a second embodiment of the present invention.
[FIG. 12]
   A development view of part of a cross-section taken on lines B-B and B'-B' of FIG. 11 along the circumferential direction.
[FIG. 13]
   A skeleton diagram schematically showing the arrangement of a magnetic power transmission system according to a third embodiment of the present invention.
[FIG. 14]
   A development view of part of a cross-section taken on line C-C of FIG. 13 along the circumferential direction.
[FIG. 15]
   A skeleton diagram schematically showing a variation of the magnetic power transmission system.
[FIG. 16]
   A diagram schematically showing another variation of the magnetic power transmission system.
[FIG. 17]
   A skeleton diagram showing the arrangement of a magnetic power transmission system according to a fourth embodiment of the present invention and a drive system of a vehicle to which is applied the magnetic power transmission system.
[FIG. 18]
   A skeleton diagram schematically showing essential components of the magnetic power transmission system according to the fourth embodiment.
[FIG. 19]
   A schematic development view of part of a cross-section taken on line F-F of FIG. 18 along the circumferential direction.
[FIG. 20]
   A diagram showing an arrangement which is functionally identical to the arrangement shown in the FIG. 19 development view.
[FIG. 21]
   A skeleton diagram schematically showing a magnetic power transmission system according to a fifth embodiment of the invention and a drive system of a vehicle to which is applied the magnetic power transmission system.
[FIG. 22]
   A skeleton diagram schematically showing essential components of the magnetic power transmission system according to the fifth embodiment.
[FIG. 23]
   A development view of part of a cross-section taken on lines G-G and G'-G' of FIG. 21 along the circumferential direction.
[FIG. 24]
   A diagram showing an arrangement which is functionally identical to the arrangement shown in the FIG. 23 development view.
[FIG. 25]
   A skeleton diagram schematically showing a magnetic power transmission system according to a sixth embodiment of the invention.
[FIG. 26]
   A cross-sectional view of part of a cross-section taken on line H-H of FIG. 23.

### [Best Mode for Carrying Out the Invention]

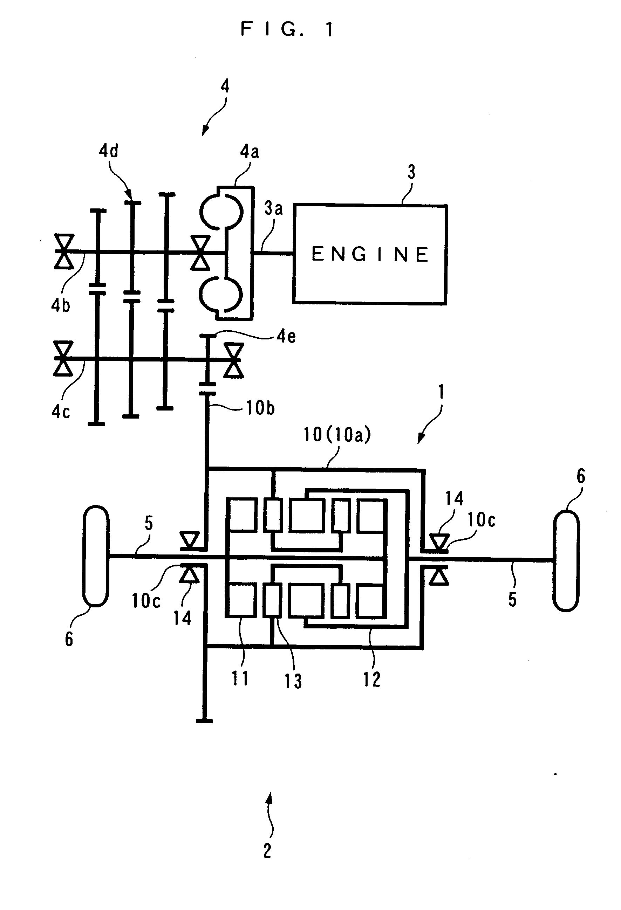

Hereafter, a magnetic power transmission system according a first embodiment of the present invention will be described with reference to the drawings. The first embodiment is an example in which the magnetic power transmission system of the present invention is applied to a differential of a drive system of a vehicle. FIG. 1 schematically shows the arrangement of the magnetic power transmission system 1 according the present embodiment, and the drive system of the vehicle 2, which is equipped with the magnetic power transmission system 1. As shown in the figure, the vehicle 2 includes an engine 3, an automatic transmission 4, the magnetic power transmission system 1, left and right drive shafts 5 and 5, and left and right drive wheels 6 and 6.

In the vehicle 2, after being subjected to speed change by the automatic transmission 4, torque of the engine 3 is transmitted to the left and right drive wheels 6 and 6 via the magnetic power transmission system 1 and the respective left and right drive shafts 5 and 5.

The automatic transmission 4 includes a torque converter 4a connected to a crankshaft 3a of the engine 3, a main shaft 4b integrally formed with an output shaft of the torque converter 4a, an auxiliary shaft 4c parallel to the main shaft 4b, a gear mechanism 4d which is comprised of a plurality of gear pairs (only part of which is shown) arranged on the shafts 4b and 4c and has a plurality of gear positions, an output gear 4e disposed on the auxiliary shaft 4c, a clutch mechanism (not shown) for selectively switching gear positions of the gear mechanism 4d, and so forth.

In the automatic transmission 4, the gear positions of the gear mechanism 4d are selectively switched according to a speed change command from a control system, not shown, and torque transmitted from the engine 3 via the torque converter 4a is transmitted to the magnetic power transmission system 1 via the output gear 4e after speed change to a rotational speed dependent on the gear position of the gear mechanism 4d.

Next, a description will be given of the magnetic power transmission system 1. FIG. 2 is a schematic diagram of essential components of the magnetic power transmission system 1, and FIG. 3 is a planar development view of part of a cross-section taken on line A-A of FIG. 2 along the circumferential direction. It should be noted that in FIG. 3, hatching in portions illustrating cross-sections are omitted for ease of understanding. Further, in the following description, the left side and the right side as viewed in the figures will be referred to as "the left" and "the right".

As shown in FIGS. 1 and 2, the magnetic power transmission system 1 includes a casing 10, an outer rotor 11, an inner rotor 12, and an intermediate rotor 13. The casing 10 includes a hollow cylindrical body 10a, a gear 10b integrally formed with the body 10a, and shafts 10c and 10c. The gear 10b is formed in a manner extending outward from an outer peripheral surface of the body 10a, and is in constant mesh with the output gear 4e of the automatic transmission 4. With this arrangement, in accordance with rotation of the output gear 4e of the automatic transmission 4, the casing 10 as well rotates. Further, the shafts 10c and 10c, having a hollow cylindrical shape, extend from the left and right side surfaces of the body 10a, and are rotatably supported by two bearings 14 and 14, respectively.

On the other hand, the outer rotor 11 includes a rotating shaft 11a, and a pair of left and right disks 11b and 11b concentrically formed on the rotating shaft 11a. The rotating shaft 11a is concentric with the shafts 10c of the casing 10, and extends through inner holes of the casing 10c, with its left end connected to the drive shaft 5. Further, the right disk 11b is fixed to the right end of the rotating shaft 11a, and the left disk 11b is secured to a predetermined portion of the rotating shaft 11a with a predetermined spacing from the right disk 11b.

The left and right disks 11b and 11b are each made of a soft magnetic material element, and on opposed surfaces thereof, left and right permanent magnet rows are formed in plane symmetry with each other at respective locations toward outer peripheral ends of the surfaces. The left and right permanent magnet rows are each comprised of m (m is an integer) permanent magnets 11c, and the permanent magnets 11c are mounted to the disks 11b in a state arranged such that each opposed ones of the permanent magnets 11c and 11c have the same polarity. Further, in each permanent magnet row, the m permanent magnets 11c are arranged at equally spaced intervals of a predetermined distance such that the magnetic poles thereof are different in polarity between each adjacent two 11c and 11c of them.

Further, the inner rotor 12 includes a rotating shaft 12a concentric with the rotating shaft 11a of the outer rotor 11, and a hollow cylindrical casing portion 12b concentrically and integrally formed with the rotating shaft 12a. The rotating shaft 12a has a right end thereof connected to the drive shaft 5. Further, the casing portion 12b has a permanent magnet row arranged on a left end thereof such that the permanent magnet row is positioned in the center between the two permanent magnet rows of the outer rotor 11 and is opposed to them. This permanent magnet row is comprised of m permanent magnets 12c.

The permanent magnets 12c are mounted to the casing portion 12b in a state arranged such that magnetic poles on the left and right sides thereof are different in polarity between each adjacent two 12c and 12c of them. Further, the m permanent magnets 12c are provided such that they are in plane symmetry with the above-described m permanent magnets 11c when the outer rotor 11 and the inner rotor 12 are in a predetermined rotational position relationship. More specifically, the permanent magnets 12c are arranged in the same number at the same pitch and at the same radial distance from the center of rotation as the permanent magnets 11c. Furthermore, the opposite side surfaces of each permanent magnet 12c have approximately the same area and shape as an end face of each permanent magnet 11c opposed thereto.

It should be noted that in the present embodiment, one of the outer rotor 11 and the inner rotor 12 corresponds to first, third, and seventh movable members, and the other to second, fourth, and eighth movable members. Further, either the left and right permanent magnets 11c or the permanent magnets 12c correspond to first and third magnetic poles, and the other to second and fourth magnetic poles.

Furthermore, the intermediate rotor 13 rotates in unison with the casing 10, and includes a hollow cylindrical portion 13a rotatably fitted on the rotating shaft 11a, a left wall 13b radially extending from the left end of the hollow cylindrical portion 13a and continuing to the inner wall of the casing 10, and a right wall 13c integrally formed with the right end of the hollow cylindrical portion 13a.

A left soft magnetic material element row is provided at a predetermined portion of the left wall 13b such that it is in the center between the left permanent magnet row of the outer rotor 11 and the permanent magnet row of the inner rotor 12 in an opposed relation thereto. The left soft magnetic material element row is comprised of m left soft magnetic material elements (e.g. laminates of steel plates) 13d, and the left soft magnetic material elements 13d are mounted to the left wall 13b such that they are in plane symmetry with the above-described permanent magnets 11c or the permanent magnets 12c when the intermediate rotor 13 is in a predetermined rotational position relationship with the outer rotor 11 or the inner rotor 12. More specifically, the left soft magnetic material elements 13d are arranged in the same number at the same pitch and at the same radial distance from the center of rotation as the permanent magnets 11c and the permanent magnets 12c. Furthermore, the opposite side surfaces of each left soft magnetic material element 13d have approximately the same area and shape as the end face of each permanent magnet 11c and the opposite side surfaces of each permanent magnet 12c.

On the other hand, a right soft magnetic material element row is provided at an end of the right wall 13c such that it is positioned in the center between the right permanent magnet row of the outer rotor 11 and the permanent magnet row of the inner rotor 12 in an opposed relation thereto. The right soft magnetic material element row is comprised of m right soft magnetic material elements (e.g. laminates of steel plates) 13e. The right soft magnetic material elements 13e are arranged in the same number at the same pitch and at the same radial distance from the center of rotation as the left soft magnetic material elements 13d, and are mounted to the right wall 13b in a state circumferentially displaced from the left soft magnetic material elements 13d by half of the pitch (see FIG. 3). Furthermore, similarly to the opposite side surfaces of each left soft magnetic material element 13d, the opposite side surfaces of each right soft magnetic material element 13e have approximately the same area and shape as the end face of each permanent magnet 11c and the opposite side surfaces of each permanent magnet 12c.

Further, the respective distances between the opposite side surfaces of the left soft magnetic material element 13d, and the opposed end face of the left permanent magnet 11c and the opposed left side surface of the permanent magnet 12c, and the respective distances between the opposite side surfaces of the right soft magnetic material element 13e, and the opposed end face of the right permanent magnet 11c and the opposed right side surface of the permanent magnet 12c are set to be equal to each other.

It should be noted that in the present embodiment, the intermediate rotor 13 corresponds to fifth, sixth and ninth movable members, while one of the left and right soft magnetic material elements 13d and 13e corresponds to a first soft magnetic material element, and the other to a second soft magnetic material element.

Furthermore, the above-described casing 10 and three rotors 11 to 13 are supported by a large number of radial bearings and thrust bearings (none of which are shown in the figures), such that they hardly change in mutual positional relationships in the direction of the rotational axis and the radial direction, and are arranged such that they are rotatable about the same rotational axis relative to each other.

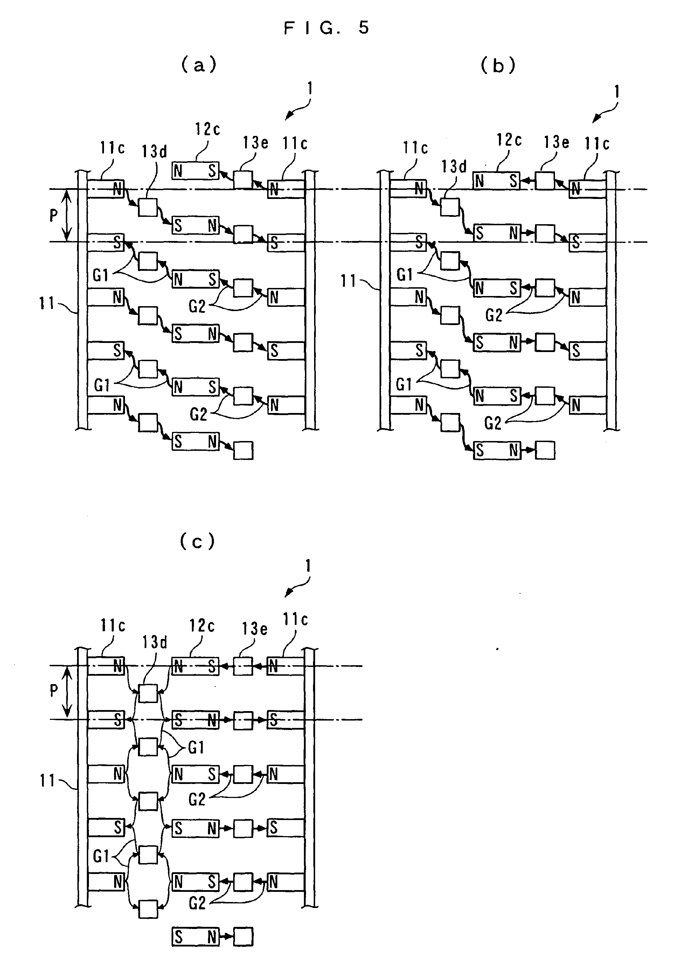

Next, a description will be given of the operation of the magnetic power transmission system 1 arranged as described above. It should be noted that in the following description, the rotational speeds of the three rotors 11 to 13 are represented by V1 to V3, respectively, and torques of the three rotors 11 to 13 by TRQ1 to TRQ3. First, a case will be described with reference to FIGS. 4 and 5, in which the torque TRQ2 is input to the inner rotor 12 in a state of the outer rotor 11 being unrotatably fixed (V1 = 0, TRQ1 = 0), whereby the inner rotor 12 is rotated in a predetermined direction (corresponding to a downward direction, as viewed in FIG. 4).

First, before the start of rotation of the inner rotor 12, if the opposite side surfaces of each permanent magnet 12c of the inner rotor 12 are in respective positions opposed to the end faces of the permanent magnets 11c and 11c of the outer rotor 11, the above-described arrangement causes one of each two pairs of the magnetic poles opposed to each other to have polarities different from each other, and the other of the same to have the same polarity. For example, as shown in FIG. 4(a), when the magnetic pole of each left permanent magnet 11c and the magnetic pole at a left-side end of each permanent magnet 12c have polarities different from each other, if each left soft magnetic material element 13d is in a position between these magnetic poles, each right soft magnetic material element 13e is in a position in the center between a right-side pair of permanent magnets 11c and 12c in a opposed position, and a right-side pair of permanent magnets 11c and 12c adjacent thereto.

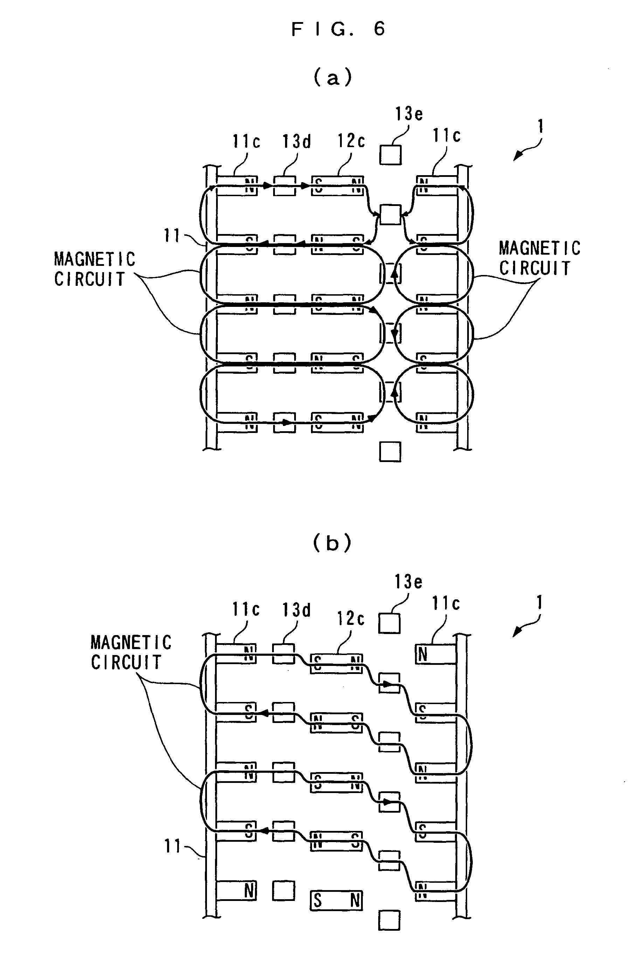

In this state, a first magnetic line G1 of force is generated between the magnetic pole of each left permanent magnet 11c, each left soft magnetic material element 13d, and the magnetic pole at the left-side end of each permanent magnet 12c, and a second magnetic line G2 of force is generated between the magnetic pole of each right permanent magnet 11c, each right soft magnetic material element 13e, and the magnetic pole at the right-side end of the permanent magnet 12c, whereby magnetic circuits as shown in FIG. 6(a) are formed.

As described hereinbefore, the magnetic line of force has a characteristic that when bent, it generates a magnetic force acting to reduce the length thereof, and therefore when the first magnetic line G1 of force is bent, the magnetic force acting on the left soft magnetic material element 13d becomes larger as the degree of bend of the first magnetic line G1 of force is larger and the total amount of magnetic flux thereof is larger. More specifically, the magnetic force acting on the left soft magnetic material element 13d is determined by the synergistic action of the degree of bend of the first magnetic line G1 of force and the total amount of magnetic flux thereof. Similarly, also in a case where the second magnetic line G2 of force is bent, a magnetic force acting on the right soft magnetic material element 13e is determined by the synergistic action of the degree of bend of the second magnetic line G2 of force and the total amount of magnetic flux thereof. Therefore, in the state shown in FIGS. 4(a) and 6(b), no magnetic forces that rotate the right soft magnetic material elements 13e upward or downward, as viewed in the figures, are generated by the synergistic action of the degree of bend of the second magnetic lines G2 of force and total amounts of magnetic flux thereof.

Then, when the torque TRQ2 causes the inner rotor 12 to rotate from a position shown in FIG. 4(a) to a position shown in FIG. 4(b), in accordance with rotation of the inner rotor 12, the second magnetic line G2 of force that is generated between an N pole of a right permanent magnet 11c, a right soft magnetic material element 13e, and an S pole at the right-side end of a permanent magnet 12c, or between an S pole of a right permanent magnet 11c, a right soft magnetic material element 13e, and an N pole at the right-side end of a permanent magnet 12c, increases in its total amount of magnetic flux, and the first magnetic line G1 of force between a left soft magnetic material element 13d and the magnetic pole at the left-side end of a permanent magnet 12c is bent. Thus, magnetic circuits as shown in FIG. 6(b) are formed by the first magnetic lines G1of force and the second magnetic lines G2 of force.

In this state, considerably strong magnetic forces act on the left soft magnetic material elements 13d by the synergistic action of the degree of bend of the first magnetic lines G1 of force and the total amounts of magnetic flux thereof, and drive the left soft magnetic material elements 13d downward, as viewed in FIG. 4, while relatively weak magnetic forces act on the right soft magnetic material elements 13e by the synergistic action of the degree of bend of the second magnetic lines G2 of force and the total amounts of magnetic flux thereof, and drive the right soft magnetic material elements 13e downward, as viewed in FIG. 4. As a result, the intermediate rotor 13 is driven such that it is rotated in the same direction as the direction of rotation of the inner rotor 12, by the resultant force of the magnetic forces acting on the left soft magnetic material elements 13d and the magnetic forces acting on the right soft magnetic material elements 13e.

Then, when the inner rotor 12 rotates from the position shown in FIG. 4(b) to respective positions shown in FIGS. 4(c) and 4(d), and FIGS. 5(a) and 5(b) in the mentioned order, the left soft magnetic material elements 13d and the right soft magnetic material elements 13e are driven downward by the magnetic forces generated by the first magnetic lines G1 of force and the second magnetic lines G2 of force, respectively, whereby the intermediate rotor 13 is rotated in the same direction as the direction of rotation of the inner rotor 12. During the rotation of the intermediate rotor 13, the magnetic forces acting on the left soft magnetic material elements 13d are progressively decreased by the synergistic action of the degree of bend of the first magnetic lines G1 of force and the total amounts of magnetic flux thereof, whereas the magnetic forces acting on the right soft magnetic material elements 13e are progressively increased by the synergistic action of the degree of bend of the second magnetic lines G2 of force and the total amounts of magnetic flux thereof.

Then, during rotation of the inner rotor 12 from the position shown in FIG. 5(b) to a position shown in FIG. 5(c), the second magnetic lines G2 of force are bent, and the total amounts of magnetic flux thereof become close to the maximum, so that the strongest magnetic forces of the second magnetic line G2 act on the right soft magnetic material elements 13e by the synergistic action of the degree of bend of the second magnetic lines G2 of force and the total amounts of magnetic flux thereof. After that, as shown in FIG.5(c), when the inner rotor 12 rotates by one pitch P of the permanent magnet 11c to thereby cause each permanent magnet 12c to move to a position opposed to left and right permanent magnets 11c and 11c, the magnetic pole of each left permanent magnet 11c and the magnetic pole at the left-side end of each permanent magnet 12c have the same polarity and each left soft magnetic material element 13d is in a position between the magnetic poles of two pairs of permanent magnets 11c and 12c, each pair having the same polarity. In this state, no magnetic forces that rotate the left soft magnetic material element 13d downward, as viewed in FIG. 5, are generated by the synergistic action of the degree of bend of the first magnetic lines G1 of force and the total amount of magnetic flux thereof. On the other hand, the magnetic pole of each right permanent magnet 11c and the magnetic pole at the right-side portion of each permanent magnet 12c have polarities different from each other.

From this state, when the inner rotor 12 further rotates, the left soft magnetic material elements 13d are driven downward by magnetic forces generated by the synergistic action of the degree of bend of the first magnetic lines G1 of force and the total amounts of magnetic flux thereof, while the right soft magnetic material elements 13e are driven downward by magnetic forces generated by the synergistic action of the degree of bend of the second magnetic lines G2 of force and the total amounts of magnetic flux thereof, whereby the intermediate rotor 13 is rotated in the same direction as the direction of rotation of the inner rotor 12. During the process, as the inner rotor 12 rotates to the position shown in FIG. 4(a), inversely to the above, the magnetic forces acting on the left soft magnetic material elements 13d are increased by the synergistic action of the degree of bend of the first magnetic lines G1 of force and the total amounts of magnetic flux thereof, whereas the magnetic forces acting on the right soft magnetic material elements 13e are decreased by the synergistic action of the degree of bend of the second magnetic lines G2 of force and the total amounts of magnetic flux thereof.

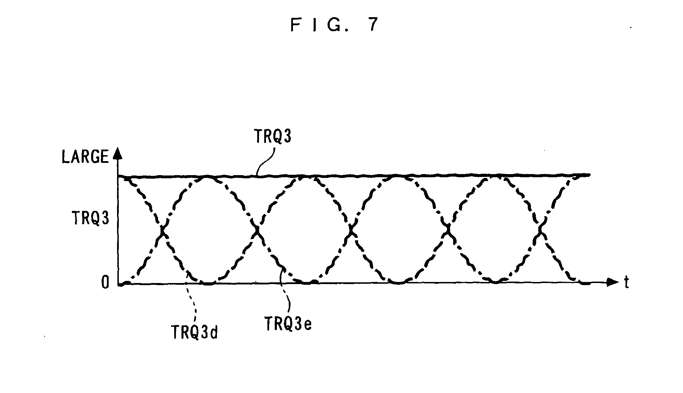

As described above, in accordance with the rotation of the inner rotor 12, the intermediate rotor 13 is driven while alternately repeating a state in which the magnetic forces acting on the left soft magnetic material elements 13d are increased and the magnetic forces acting on the right soft magnetic material elements 13e are decreased and a state in which the former are decreased and the latter are increased, so that it is possible to transmit the torque TRQ2 input to the inner rotor 12 to the intermediate rotor 13. In this case, when respective torques transmitted via the left soft magnetic material element 13d and the right soft magnetic material element 13e are represented by TRQ3d and TRQ3e, the relationship between torque TRQ3 transmitted to the intermediate rotor 13 and the torques TRQ3d and TRQ3e is generally as shown in FIG. 7. Referring to the figure, the two torques TRQ3d and TRQ3e repeat periodic changes, and the sum of TRQ3d and TRQ3e becomes equal to the torque TRQ3 transmitted to the intermediate rotor 13. That is, TRQ3 = TRQ3d + TRQ3e holds.

Further, As is apparent from comparison between FIG. 4(a) and FIG. 5(c), when the inner rotor 12 rotates by one pitch P of the permanent magnet 11c, the intermediate rotor 13 rotates by only half (P/2) of the same, and hence the intermediate rotor 13 is driven such that it rotates at a value equal to one half of the rotational speed of the inner rotor 12. This relationship is represented as shown in FIG. 8(a), in which V3 = 0.5 x (V2 + V1) = 0.5 x V2 holds. As described above, since the rotational speed V3 of the intermediate rotor 13 is reduced to one half of the rotational speed V2 of the inner rotor 12, the torque TRQ3 transmitted to the intermediate rotor 13 becomes twice as large as the torque TRQ2 of the inner rotor 12, insofar as TRQ3 is within the torque capacity. That is, TRQ3 = 2 x TRQ2 holds.

It should be noted that during rotation of the inner rotor 12 as described above, the intermediate rotor 13 is rotated by the magnetic forces generated by the first magnetic lines G1 of force and the second magnetic lines G2 of force in a manner pulled by the inner rotor 12, so that the intermediate rotor 13 rotates with a small phase delay with respect to the inner rotor 12. Therefore, when the inner rotor 12 is at the position shown in FIG. 5(c) during rotation thereof, each left soft magnetic material element 13d and each right soft magnetic material element 13e are actually at positions slightly upward of respective positions shown in FIG. 5(c). In FIG. 5(c), however, for ease of understanding the above-described rotational speed, the right soft magnetic material element 13e and the left soft magnetic material element 13d are shown at the positions illustrated in the figure.

Further, inversely to the above, in a case where the inner rotor 12 is fixed (V2 = 0, TRQ2 = 0), and the TRQ1 is input to the outer rotor 11, in accordance with the rotation of the outer rotor 11, the intermediate rotor 13 is driven, as described above, the state is repeated while alternately repeating a state in which the magnetic forces acting on the left soft magnetic material elements 13d are increased and the magnetic forces acting on the right soft magnetic material elements 13e are decreased and a state in which the magnetic forces acting on the left soft magnetic material elements 13d are decreased and the magnetic forces acting on the right soft magnetic material elements 13e are increased. As a result, it is possible to transmit the torque TRQ1 input to the outer rotor 11 to the intermediate rotor 13.

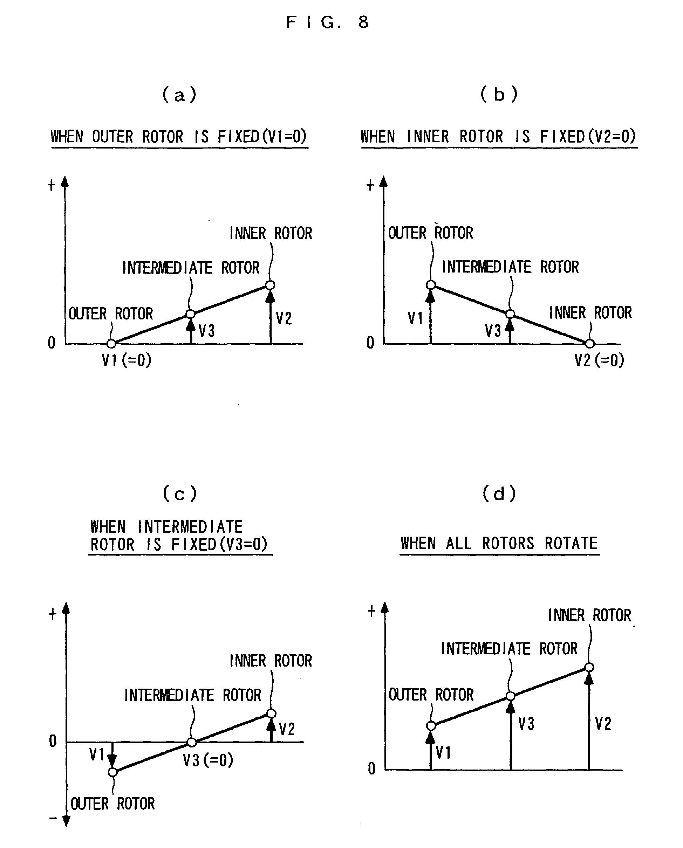

During the process, for the above-mentioned reason, the intermediate rotor 13 is driven such that it rotates at a value equal to one half of the rotational speed of the outer rotor 11. More specifically, V3 = 0.5 x (V1 + V2) = 0.5 x V1 holds (see FIG. 8(b)). Further, since the rotational speed V3 of the intermediate rotor 13 is decreased to one half of the rotational speed V1 of the outer rotor 11, the torque TRQ3 transmitted to the intermediate rotor 13 becomes twice as large as the torque TRQ1 of the outer rotor 11, insofar as TRQ3 is within the torque capacity. That is, TRQ3 = 2 x TRQ1 holds.

Next, a description will be given of a case in which the intermediate rotor 13 is fixed, and the torque TRQ2 is input to the inner rotor 12, with reference to FIG. 9. First, it is assumed that before the start of rotation of the inner rotor 12, the three rotors 11 to 13 are in a positional relationship shown in FIG. 9(a). From this state, when the torque TRQ2 is input and the inner rotor 12 rotates to a position shown in FIG. 9(b), the first magnetic line G1 of force between the left soft magnetic material element 13d and the permanent magnet 12c is bent, and at the same time the permanent magnet 12c becomes closer to the right soft magnetic material element 13e, whereby the length of the second magnetic line G2 between the right soft magnetic material element 13e and the magnetic pole at the right-side end of the permanent magnet 12c is decreased to increase the total amount of magnetic flux of the second magnetic line G2. As a result, the aforementioned magnetic circuits as shown in FIG. 6(b), referred to hereinabove, are formed.

In this state, although magnetic forces are generated between the left and right soft magnetic material elements 13d and 13e and the magnetic poles at the opposite-side ends of the permanent magnets 12c, by the synergistic action of the degrees of bend of the first magnetic lines G1 of force and the second magnetic lines G2 of force and the total amounts of magnetic flux thereof, they do not have influence since the inner rotor 12 is driven by the torque TRQ2 and at the same time the left and right soft magnetic material elements 13d and 13e are fixed. Further, the first magnetic lines G1 of force between the magnetic poles of the left permanent magnets 11c and the left soft magnetic material elements 13d are straight though their total amounts of magnetic flux are large, so that no magnetic forces for driving the left soft magnetic material elements 13d are generated. On the other hand, the second magnetic lines G2 of force between the right soft magnetic material elements 13e and the magnetic poles of the right permanent magnets 11c generate magnetic forces that pull the right permanent magnets 11c toward the right soft magnetic material elements 13e, by the synergistic action of the degree of bend of thereof and the total amounts of magnetic flux thereof, whereby the outer rotor 11 is driven in a direction (upward as viewed in FIG. 9) opposite to the direction in which the inner rotor 12 is driven, to be rotated toward a position shown in FIG. 9(c).

Then, during rotation of the outer rotor 11 from the position shown in FIG. 9(b) toward the position shown in FIG. 9(c), the inner rotor 12 is rotated toward a position shown in FIG. 9(d). Along with the rotation of the inner rotor 12, the permanent magnets 12c become still closer to the right soft magnetic material elements 13e, and the second magnetic lines G2 of force between the permanent magnets 12c and the right permanent magnets 11c increase in the total amounts of magnetic flux thereof and decrease in the degree of bend thereof, so that magnetic forces that pull the right permanent magnets 11c toward the right soft magnetic material elements 13e are generated by the synergistic action of the degree of bend of the second magnetic lines G2 of force and the total amounts of magnetic flux thereof. On the other hand, bent first magnetic lines G1 of force are generated between the magnetic poles of the left permanent magnets 11c and the left soft magnetic material elements 13d, and magnetic forces that pull the left permanent magnets 11c toward the left soft magnetic material elements 13d are generated by the synergistic action of the degree of bend of the first magnetic lines G1 of force and the total amounts of magnetic flux thereof. However, the magnetic forces generated by the first magnetic lines G1 of force are considerably weaker than the magnetic forces generated by the second magnetic lines G2 of force. As a result, the outer rotor 11 is driven by a magnetic force corresponding to the difference between the above magnetic forces in the direction opposite to the direction of rotation of the inner rotor 12.

Then, when the inner rotor 12 and the outer rotor 11 are placed in a positional relationship shown in FIG. 9(d), the magnetic forces generated by the first magnetic lines G1 of force between the left soft magnetic material elements 13d and the magnetic poles of the left permanent magnets 11c, and the magnetic forces generated by the second magnetic lines G2 of force between the right soft magnetic material elements 13e and the magnetic poles of the right permanent magnets 11c are balanced, whereby the outer rotor 11 is temporarily placed in an undriven state.

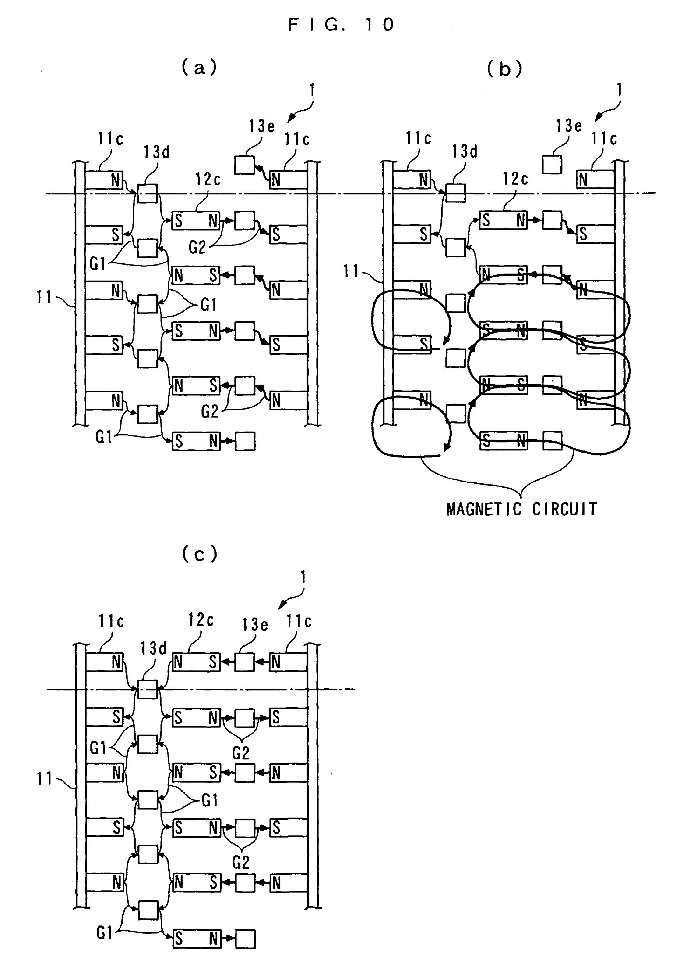

From this state, when the inner rotor 12 rotates to a position shown in FIG. 10(a), the state of generation of the first magnetic lines G1 of force is changed to form magnetic circuits as shown in FIG. 10(b). This causes the magnetic forces generated by the first magnetic lines G1 of force to cease to act to pull the left permanent magnets 11c toward the left soft magnetic material elements 13d, and therefore the right permanent magnets 11c are pulled toward the right soft magnetic material elements 13e by the magnetic forces generated by the second magnetic lines G2 of force, whereby the outer rotor 11 is driven to a position shown in FIG. 10(c) in the direction opposite to the direction of rotation of the inner rotor 12.

Then, when the inner rotor 12 rotates from the position shown in FIG. 10(c) slightly downward, as viewed in the figure, the first magnetic lines G1 of force between the left soft magnetic material elements 13d and the magnetic poles of the left permanent magnets 11c generate magnetic forces that pull the left permanent magnets 11c toward the left soft magnetic material elements 13d by the synergistic action of the degree of bend of the first magnetic lines G1 of force and the total amounts of magnetic flux thereof, inversely to the above, whereby the outer rotor 11 is driven in the direction opposite to the direction of rotation of the inner rotor 12. When the inner rotor 12 further rotates downward, as viewed in the figure, the outer rotor 11 is driven by the magnetic force corresponding to the difference between the magnetic forces generated by the first magnetic lines G1 of force and the magnetic forces generated by the second magnetic lines G2 of force, in the direction opposite to the direction of rotation of the inner rotor 12. After that, when the magnetic forces generated by the second magnetic lines G2 of force cease to act, the outer rotor 11 is driven by the magnetic forces generated by the first magnetic lines G1 of force alone, in the direction opposite to the direction of rotation of the inner rotor 12.

As described above, along with the rotation of the inner rotor 12, the magnetic forces generated by the first magnetic lines G1 of force between the left soft magnetic material elements 13d and the left permanent magnets 11c, the magnetic forces generated by the second magnetic lines G2 of force between the right soft magnetic material elements 13e and the right permanent magnets 11c, and the magnetic force corresponding to the difference between the above magnetic forces alternately act on the outer rotor 11, whereby the outer rotor 11 is driven in the direction opposite to the direction of rotation of the inner rotor 12. Therefore, it is possible to transmit the torque TRQ2 input to the inner rotor 12 to the outer rotor 11. In this case, as shown in FIG. 8(c), the outer rotor 11 rotates at the same speed as that of the inner rotor 12 in the direction opposite to the direction of rotation thereof, whereby -V1 = V2, i.e. |V1| = |V2| holds. As described above, the inner rotor 12 rotates at the same speed as that of the outer rotor 11 in the direction opposite to the direction of rotation thereof, and hence insofar as the torque TRQ2 input to the inner rotor 12 assumes a value within the range of the torque capacity of the magnetic power transmission system 1, the torque TRQ2 is transmitted to the outer rotor 11 as it is. That is, TRQ2 = TRQ1 holds.

On the other hand, also when the intermediate rotor 13 is fixed, and the torque TRQ1 is input to the outer rotor 11, similarly to the above, the inner rotor 12 is driven such that it rotates at the same speed as that of the outer rotor 11 in the direction opposite to the direction of rotation thereof. In this case, as to the rotational speed, V1 = -V2 holds, i.e. |V1| = |V2| holds, and as to the torque, TRQ1 = TRQ2 holds.

Next, a description will be given of a case in which the three rotors 11 to 13 are all rotating. FIG. 8(a), referred to hereinabove, shows the relationship between the rotational speeds V1 to V3 of the three rotors 11 to 13, obtained when the outer rotor 11 is fixed. When the three rotors 11 to 13 are all rotating, it is only required, in FIG. 8(a), to set the rotational speed V1 of the outer rotor 11 such that V1 ≠ 0 holds, and the relationship between the rotational speeds V1 to V3 is shown in FIG. 8(d). In this case, V3 = 0.5 x (V1 + V2) holds.

Since the magnetic power transmission system 1 according to the present embodiment is used as a differential, the three rotors 11 to 13 are all rotating during traveling of the vehicle 2, and the relationship between the rotational speeds V1 to V3 becomes as shown in FIG. 8(d). It is clear from reference to FIGS. 8(a) to 8(d) that the rotational speeds V1 to V3 of the three rotors 11 to 13 have the same characteristics as those of the rotational speeds of three members of a planetary gear unit, so that the magnetic power transmission system 1 can be regarded as having the same function as that of the planetary gear unit, and performing the same operation as carried out by the same.

Further, when TRQ1 ≠ 0, TRQ2 ≠ 0, and TRQ3 ≠ 0, the torques of the three rotors 11 to 13 satisfy the relationship of TRQ1 = TRQ2, and TRQ3 = TRQ1 + TRQ2. More specifically, the torque TRQ3 input to the intermediate rotor 13 is divided in two and distributed to the outer rotor 11 and the inner rotor 12. It should be noted that inversely to the magnetic power transmission system 1 according to the present embodiment, when both the outer rotor 11 and the inner rotor 12 are used as the torque input side and the intermediate rotor 13 as the torque output side as well, the relationship of TRQ3 = TRQ1 + TRQ2 is satisfied.

As described above, according to the magnetic power transmission system 1 of the present embodiment, since torque input to any one of the three rotors 11 to 13 is transmitted to one or both of the other two rotors by magnetic forces, it is possible to execute the same torque-transmitting operation as carried out by the planetary gear unit, using the magnetic forces. Therefore, in a unit for carrying out the same torque-transmitting operation as executed by the planetary gear unit, it is possible to ensure advantageous effects peculiar to the magnetic power transmission system, including no requirement of a lubricating structure, and no fear of generation of backlash or dust at contacting portions. Further, when torque is transmitted, magnetic paths are formed using all of the left and right permanent magnets 11c and 11c, the left soft magnetic material elements 13d, the permanent magnets 12c, and the right soft magnetic material elements 13e, so that it is possible to efficiently secure the areas of the magnetic paths. As a result, while maintaining the advantageous effects obtained by performing power transmission via magnetic forces, it is possible to improve the torque transmitting efficiency and the torque transmitting capacity, compared with the conventional magnetic power transmission system which forms magnetic paths using only part of magnetic poles.

In addition to that, the magnetic power transmission system 1 can be realized by a relatively simple construction having the outer rotor 11 including the left and right permanent magnet rows, the inner rotor 12 including the permanent magnet row, and the intermediate rotor 13 including the left and right soft magnetic material elements, so that the manufacturing costs can be reduced compared with the conventional magnetic power transmission system provided with magnetic teeth having a complicated shape.

It should be noted that although the first embodiment is an example in which the magnetic power transmission system according to the present invention is applied to the differential for a vehicle, this is not limitative, but the magnetic power transmission system according to the present invention can be applied to torque-transmitting systems of various industrial apparatuses and devices, particularly to a torque-transmitting system required to perform such an operation as is carried out by the planetary gear unit. For example, the magnetic power transmission system according to the present invention may be applied to a power transmission system for an aerogenerator.

Further, although the first embodiment is an example in which the left and right permanent magnets 11c and 11c, the permanent magnets 12c, the left and right soft magnetic material elements 13d and 13e are arranged in the same number at the same pitch, this is not limitative, but any suitable number and arrangement of these members may be employed insofar as the first magnetic lines G1 of force and the second magnetic lines G2 of force are generated such that torque transmission can be properly performed between the three rotors 11 to 13.

For example, the members may be arranged such that when each permanent magnet 12c is in a positional relationship with each of the left and right permanent magnets 11c and 11c, in which it is slightly displaced from a line connecting the respective centers of the left and right permanent magnets 11c and 11c, one of the left and right soft magnetic material elements 13d and 13e is in a position between the permanent magnets 11c and 12c, and the other thereof is in a position between each circumferentially adjacent two of the permanent magnets 11c and those of the permanent magnets 12c. Further, the permanent magnets 11c and 11c, the permanent magnets 12c, and the left and right soft magnetic material elements 13d and 13e may be arranged in the same number at approximately equal intervals.

Furthermore, the left and right soft magnetic material elements 13d and 13e may be arranged in the same number at the same pitch, and the left and right permanent magnets 11c and 11c and the permanent magnets 12c may be arranged in the same number at the same pitch, with the number of the left and right soft magnetic material elements 13d and 13e being set to a value smaller than the number of the left and right permanent magnets 11c and 11c and the permanent magnets 12c.

Next, a magnetic power transmission system 1B according to a second embodiment will be described with reference to FIG. 11. As shown in the figure, this magnetic power transmission system 1B according to the second embodiment corresponds to the arrangement in which the three rotors 11 to 13 of the magnetic power transmission system 1 according to the first embodiment are divided in two left and right parts, respectively, and the divided parts are connecting by a gear mechanism. The other component elements are arranged similarly to the magnetic power transmission system 1 according to the first embodiment, and therefore, the following description will be given only of the different points.

The magnetic power transmission system 1B includes a pair of left and right outer rotors 21 and 21, a pair of left and right inner rotors 22 and 22, a pair of left and right intermediate rotors 23 and 23, two pairs of bearings 24 each of which is formed by left and right bearings, and three gear shafts 25 to 27 provided in a rotatable manner. The pair of left and right outer rotors 21 and 21 are arranged at respective symmetrical locations, and hence the following description is given of the left outer rotor 21, by way of example.

The left outer rotor 21 includes a rotating shaft 21a, a disk 21b concentrically and integrally formed with the rotating shaft 21a, and a gear 21d. The rotating shaft 21a is rotatably supported by a pair of bearings 24 and 24. The disk 21b is formed of a soft magnetic material, and has a permanent magnet row provided on a right side surface thereof toward an outer peripheral end thereof.

The permanent magnet row is comprised of m permanent magnets 21c. As shown in FIG. 12, similarly to the aforementioned permanent magnets 11c, the permanent magnets 21c are arranged at equally spaced intervals of a predetermined distance and are mounted to the disk 21b such that the magnetic poles at the foremost ends thereof are different in polarity between each adjacent two 21b and 21b of them. Further, the gear 21d is in constant mesh with a left gear 25a, referred to hereinafter, of the gear shaft 25. The left outer rotor 21 is arranged as described above.

On the other hand, the right outer rotor 21 is arranged such that a gear 21d thereof is in constant mesh with a right gear 25a, referred to hereinafter, of the gear shaft 25, and in this state, the magnetic pole of each permanent magnet 21c has the same polarity as that of the magnetic pole of an axially corresponding one of the permanent magnets 21c of the left outer rotor 21. Otherwise, the right outer rotor 21 is arranged similarly to the left outer rotor 21.

Further, the gear shaft 25 includes a pair of left and right gears 25a and 25a integrally formed therewith. As described above, the left and right gears 25a and 25a are in constant mesh with the gears 21d and 21d of the left and right outer rotors 21 and 21, respectively, whereby the left and right outer rotors 21 and 21 are arranged such that they rotate in the same direction at the same speed while maintaining the positional relationship shown in FIG. 12.

Further, the left and right inner rotors 22 and 22 are similarly arranged, except for part thereof. First, a description will be given of the left inner rotor 22. The left inner rotor 22 includes a hollow cylindrical rotating shaft 22a concentrically fitted on a rotating shaft 23a of the intermediate rotor 23, described hereinafter, a disk 22b integrally formed with the rotating shaft 22a, and a gear 22d. The disk 22b is formed of a soft magnetic material, and has a permanent magnet row provided on a left side surface thereof at a location toward an outer peripheral end thereof, in a manner opposed to the permanent magnet row of the left outer rotor 21.

The permanent magnet row is comprised of m permanent magnets 22c. As shown in FIG. 12, similarly to the aforementioned permanent magnets 12c, the permanent magnets 22c are mounted to the disk 22b such that the magnetic poles at the respective left and right ends of the permanent magnets 22c and 22c are different in polarity between each adjacent two of them. Further, the permanent magnets 22c are arranged in the same number at the same pitch and at the same radial distance from the center of rotation as the permanent magnets 21c. In addition to that, the opposite side surfaces of each permanent magnet 22c have approximately the same area and shape as those of the end faces of an opposed one of the permanent magnets 21c. Further, the gear 22d is in constant mesh with a left gear 26a, referred to hereinafter, of the gear shaft 26. The left inner rotor 22 is arranged as described above.

On the other hand, the right inner rotor 22 is arranged such that a gear 22d thereof is in constant mesh with a right gear 26a, referred to hereinafter, of the gear shaft 26, and in this state, the magnetic pole of each permanent magnet 22c has the same polarity as that of the magnetic pole of an axially corresponding one of the permanent magnets 22c of the left inner rotor 22. The right inner rotor 22 is arranged similarly to the left inner rotor 22 in other respects than described above.

Further, the gear shaft 26 includes a pair of left and right gears 26a and 26a integrally formed therewith. As described above, the left and right gears 26a and 26a are in constant mesh with the gears 22a and 22a of the left and right inner rotors 22 and 22, respectively, whereby the left and right inner rotors 22 and 22 are arranged such that they rotate in the same direction at the same speed while maintaining the positional relationship shown in FIG. 12.

It should be noted that in the present embodiment, either the left and right outer rotors 21 and 21 or the left and right inner rotors 22 and 22 correspond to first and third movable members, and the other to second and fourth movable members. Further, either the left and right permanent magnets 21c and 21c or the left and right permanent magnets 22c and 22c correspond to the first and third magnetic poles, and the other to the second and fourth magnetic poles.

Further, the left and right intermediate rotors 23 and 23 are similarly arranged, except for part thereof. First, a description will be given of the left intermediate rotor 23. The left intermediate rotor 23 includes a hollow cylindrical portion 23a concentrically and rotatably fitted on the rotating shaft 21a, a left wall 23b integrally formed with the hollow cylindrical portion 23a, and a gear 23c. A left soft magnetic material element row is provided at a foremost end of the left wall 23b such that it is in a position between the left permanent magnet row of the left outer rotor 21 and the permanent magnet row of the left inner rotor 22 in an opposed relation to these.

The left soft magnetic material element row is comprised of m left soft magnetic material elements 23d. The left soft magnetic material elements 23d are arranged in the same number at the same pitch and at the same radial distance from the center of rotation as the permanent magnets 21c and the permanent magnets 22c. In addition to that, the opposite side surfaces of each left soft magnetic material element 23d have approximately the same area and shape as those of the end faces of each permanent magnet 21c and each permanent magnet 22c. Further, the gear 23c is in constant mesh with a left gear 27a, referred to hereinafter, of the gear shaft 27.

On the other hand, the right intermediate rotor 23 has a right soft magnetic material element row comprised of m right soft magnetic material elements 23e. The right soft magnetic material elements 23e are arranged in the same number at the same pitch and at the same the radial distance from the center of rotation as the permanent magnets 21c and the permanent magnets 22c. In addition to that, the opposite side surfaces of each right soft magnetic material element 23e have approximately the same area and shape as those of the end faces of the opposed ones of the permanent magnets 21c and the permanent magnets 22c.

Further, in the right intermediate rotor 23, the gear 23c thereof is in constant mesh with a right gear 27a, referred to hereinafter, of the gear shaft 27, and in this state, the right soft magnetic material element 23e is disposed such that it is displaced from the left soft magnetic material element 23d by half of the pitch in the direction of rotation of the right intermediate rotor 23. The right intermediate rotor 23 is arranged similarly to the left intermediate rotor 23 in other respects than described above.

On the other hand, the distances between the respective left and right side surfaces of the left soft magnetic material element 23d, and the end face of the permanent magnet 21c of the left outer rotor 21 and the end face of the permanent magnet 22c of the left inner rotor 22, and the distances between the respective left and right side surfaces of the right soft magnetic material element 23e, and the end face of the permanent magnet 21c of the right outer rotor 21 and the end face of the permanent magnet 22c of the right inner rotor 22 are set to be equal to each other.

It should be noted that in the present embodiment, one of the left and right intermediate rotors 23 corresponds to the fifth movable member, and the other to the sixth movable member. Further, one of each left soft magnetic material element 23d and each right soft magnetic material element 23e corresponds to the first soft magnetic material element, and the other to the second soft magnetic material element.

Further, the above six rotors 21 to 23 are supported by a large number of radial bearings and thrust bearings (none of which are shown in the figures), such that they are hardly changed in the positional relationships in the direction of the rotational axis and the radial direction, and are arranged such that they are rotatable about the same rotational axis relative to each other.

According to the magnetic power transmission system 1B of the second embodiment arranged as described above, it is possible to obtain the same advantageous effects as provided by the magnetic power transmission system 1 according to the first embodiment. More specifically, it is possible to execute the same power-transmitting operation as carried out by the planetary gear unit, using the magnetic forces. Further, it is possible to efficiently secure the areas of the magnetic paths, whereby, while maintaining the advantageous effects obtained by performing power transmission via magnetic forces, it is possible to improve the torque transmitting efficiency and the torque transmitting capacity, compared with the conventional magnetic power transmission system which forms magnetic paths using only part of magnetic poles.

It should be noted that although the magnetic power transmission system 1B according to the second embodiment is an example in which the six rotors 21 to 23 as the first to sixth movable members are connected by the gear mechanism, this is not limitative, but the magnetic power transmission system according to the present invention may be arranged such that the first movable member and the third movable member, the second movable member and the fourth movable member, and the fifth movable member and the sixth movable member move relative to each other in an interlocked manner. For example, the magnetic power transmission system according to the present invention may be arranged such that two movable members move relative to each other in an interlocked manner by a combination of pulleys and belts.

Further, although the magnetic power transmission system 1B according to the second embodiment is an example in which the magnetic power transmission system is constructed to be bilaterally symmetrical except for the polarities of the magnetic poles of the permanent magnets 22c of the left and right inner rotor 22, and the arrangement of the left soft magnetic material elements 23d and the right soft magnetic material elements 23e of the left and right intermediate rotors 23, this is not limitative, but the magnetic power transmission system may be constructed to bilaterally unsymmetrical. For example, the left and right rotors of the outer rotors 21 and 21, the inner rotors 22 and 22, and the intermediate rotors 23 and 23 may be configured to have diameters different from each other such that the numbers and the pitches of the permanent magnets 21c, the permanent magnets 22c, and the soft magnetic material elements 23d and 23e are different between the left and right rotors.

Next, a magnetic power transmission system 1C according to a third embodiment of the present invention will be described. As shown in FIGS. 13 and 14, this magnetic power transmission system 1C is distinguished from the magnetic power transmission system 1 according to the first embodiment in the construction of part of the outer rotor 11, and in that it includes two actuators 17 and 17, and is arranged similarly to the magnetic power transmission system 1 in the other respects. Therefore, the following description will be given mainly of the different points of construction, while component elements of the magnetic power transmission system 1C, identical to those of the magnetic power transmission system 1, are denoted by identical reference numerals, and detailed description thereof is omitted.

As shown in the two figures, the magnetic power transmission system 1C includes the outer rotor 11, and left and right actuators 17 and 17. The outer rotor 11 includes the rotating shaft 11a, and left and right disks 11d and 11d concentric with the rotating shaft 11a. The left and right disks 11d and 11d are mounted to the rotating shaft 11a by spline-fitting, respectively, whereby they are arranged such that they are relatively axially movable with respect to the rotating shaft 11a, and rotate in unison with the rotating shaft 11a.

Further, the left and right actuators 17 and 17 (magnetic force-changing device) have the same arrangement, and hence the following description will be given of the left actuator 17, by way of example. The left actuator 17 includes a body 17a, and a rod 17b retractable with respect to the body 17a. A foremost end of the rod 17b is connected to the left disk 11d. This actuator 17 is electrically connected to a control system, not shown, and drives the left disk 11d between a transmitting position indicated by two-dot chain lines in FIG. 13 and an interrupting position indicated by solid lines in the figure, in response to a command signal from the control system.

Similarly to the left actuator 17, the right actuator 17 as well is electrically connected to the control system, not shown, and drives the right disk 11d between a transmitting position indicated by two-dot chain lines in FIG. 13 and an interrupting position indicated by solid lines in the figure, in response to a command signal from the control system.

In the magnetic power transmission system 1C, when the left and right disks 11d and 11d are at the transmitting positions, similarly to the above-described magnetic power transmission system 1 according to the first embodiment, torque is transmitted between the three rotors 11 to 13. For example, when the torque TRQ3 is input to the intermediate rotor 13, the torque TRQ3 is transmitted to the outer rotor 11 and the inner rotor 12, respectively.

From the above state, when the left and right disks 11d and 11d are driven from the transmitting positions to the interrupting positions by the left and right actuators 17 and 17, magnetic resistance between each permanent magnet 12c and the permanent magnets 11c and 11c of the left and right disks 11d and 11d is increased and the total amounts of magnetic flux thereof are decreased. In accordance with the decrease in the total amounts of magnetic flux, the torque transmitting capacity between the three rotors 11 to 13 is reduced. Then, when the left and right disks 11d and 11d are driven to the respective interrupting positions, the total amounts of magnetic flux are very much decreased, resulting in a state in which no torque is transmitted between the three rotors 11 to 13.

As described above, according to the magnetic power transmission system 1C of the third embodiment, it is possible to drive the left and right disks 11d and 11d between the transmitting positions and the interrupting positions by the actuators 17 and 17 as desired. In this case, when the left and right disks 11d and 11d are held at the transmitting positions, it is possible to obtain the same advantageous effects as provided by the magnetic power transmission system 1 according to the first embodiment. Further, by driving the left and right disks 11d and 11d from the transmitting positions toward the interrupting positions, it is possible to change the torque transmitting capacity between the three rotors 11 to 13 as desired. Particularly when the left and right disks 11d and 11d are driven to the interrupting positions, it is possible to interrupt torque transmission between the three rotors 11 to 13.

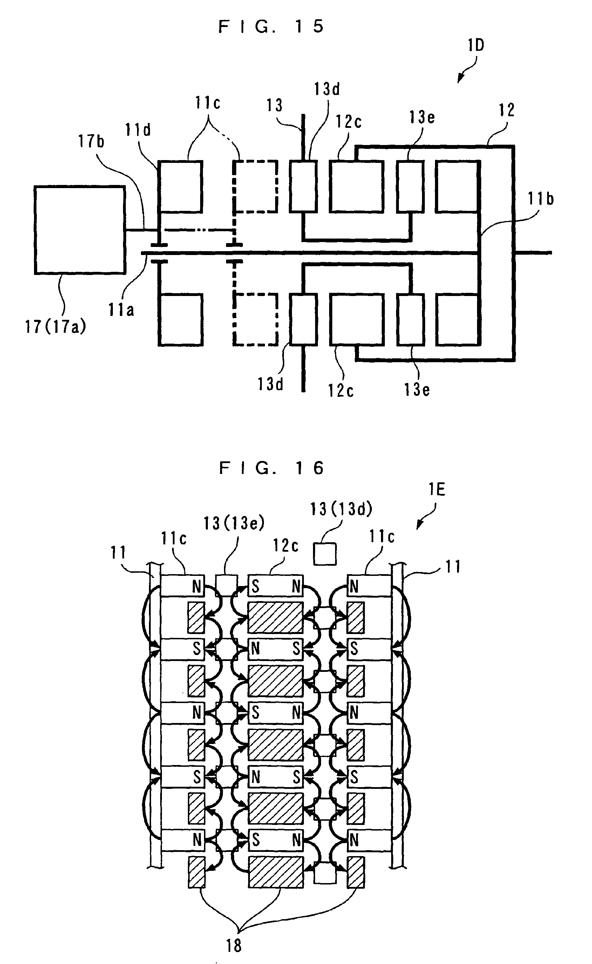

It should be noted that the method of changing the torque transmitting capacity between the three rotors 11 to 13 and interrupting transmission of torque is not limited to the above-described method according to the third embodiment, but the following method can be employed. For example, a magnetic power transmission system 1D as shown in FIG. 15 may be arranged such that the left disk 11d alone is driven from the transmitting position toward the interrupting position by the actuator 17 (magnetic force-changing device). With this arrangement, it is possible to change the torque transmitting capacity between the three rotors 11 to 13.

Further, a magnetic power transmission system 1E as shown in FIG. 16 may be arranged such that short-circuit members 18 indicated by hatching in the figure, and an actuator, not shown, for driving the short-circuit members 18 are provided, and the short-circuit members 18 are inserted between the permanent magnets 11c and 11c and between the permanent magnets 12c and 12c by the actuator, to thereby short-circuit magnetic circuits. With this arrangement, it is possible to interrupt torque transmission between the three rotors 11 to 13. It should be noted that in this example, the short-circuit members 18 and the actuator correspond to magnetic force-changing devices.

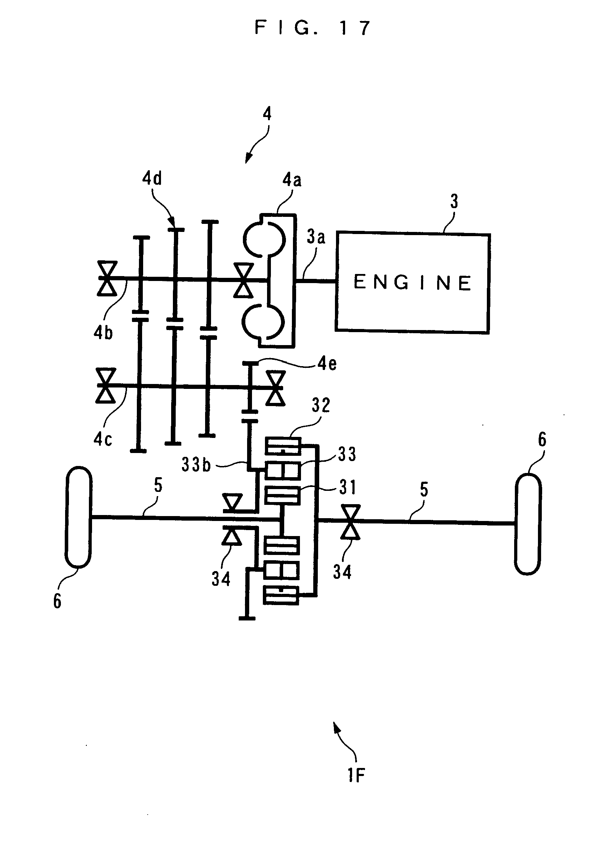

Next, a magnetic power transmission system 1F according to a fourth embodiment of the present invention will be described with reference to FIG. 17 and FIG. 18. As shown in the figures, this magnetic power transmission system 1F is applied to the differential of the drive system for the vehicle 2, similarly to the aforementioned magnetic power transmission system 1 according to the first embodiment. Since the vehicle 2 is arranged generally similarly to the vehicle 2 to which is applied the first embodiment, the following description will be given only of different points from the first embodiment, while identical component elements are denoted by identical reference numerals, and detailed description thereof is omitted.

The magnetic power transmission system 1F includes a small-diameter rotor 31, a large-diameter rotor 32, and an intermediate-diameter rotor 33, and the three rotors 31 to 33 are supported by a large number of radial bearings and thrust bearings (none of which are shown in the figures) such that they are hardly changed in the mutual positional relationships in the direction of the rotational axis and the radial direction, and are arranged such that they are rotatable about the same rotational axis relative to each other.

The small-diameter rotor 31 includes a rotating shaft 31a connected to the drive shaft 5, and a turntable 31b integrally formed with a right end of the rotating shaft 31a. The turntable 31b is formed of a soft magnetic material such that it has a horizontal H shape in cross-section, and has a permanent magnet row formed on an outer peripheral surface thereof along the circumferential direction. The permanent magnet row is comprised of m permanent magnets 31c, which are arranged, as described hereinafter.

Further, the large-diameter rotor 32 includes a rotating shaft 32a concentric with the rotating shaft 31a of the small-diameter rotor 31 and connected to the drive shaft 5, and a hollow cylindrical casing portion 32b concentrically and integrally formed with the rotating shaft 32a. A ring 32d made of a soft magnetic material is fixed to a foremost end of the casing portion 32b. A permanent magnet row is formed on the ring 32d in a manner opposed to the permanent magnet row of the large-diameter rotor 32. The permanent magnet row on the ring 32d is comprised of m permanent magnets 32c, which are arranged, as described hereinafter.

It should be noted that in the present embodiment, one of the small-diameter rotor 31 and the large-diameter rotor 32 corresponds to the first, third, and seventh movable members, and the other to the second, fourth, and eighth movable members. Further, one of each left permanent magnet 31c and each right permanent magnet 32c corresponds to the first and third magnetic poles, and the other to the second and fourth magnetic poles.

On the other hand, the intermediate-diameter rotor 33 includes a hollow cylindrical portion 33a rotatably fitted on the rotating shaft 31a, a gear 33b which is integrally formed with the hollow cylindrical portion 33a and is in constant mesh with the output gear 4e of the automatic transmission 4, an annular protruding portion 33c protruding from a right side surface of the gear 33b, and left and right soft magnetic material element rows formed on the protruding portion 33c. The left and right soft magnetic material element rows are comprised of m left magnetic material elements 33d and m right soft magnetic material elements 33e, respectively, and the left and right soft magnetic material elements 33d and 33e are arranged, described hereinafter.

It should be noted that in the present embodiment, the intermediate-diameter rotor 33 corresponds to the fifth, sixth and ninth movable members, while one of each left soft magnetic material element 33d and each right soft magnetic material element 33e corresponds to the first soft magnetic material element, and the other to the second soft magnetic material element.

FIG. 19 is a schematic development view of part of a cross-section of the magnetic power transmission system taken on line F-F of FIG. 18 along the circumferential direction. In FIG. 19, hatching indicative of cross-sectional portions is omitted for ease of understanding. As shown in the figure, each adjacent two of the permanent magnets 31c, the permanent magnets 32c, the left soft magnetic material elements 33d, and the right soft magnetic material elements 33e are arranged at the same predetermined angle, and the permanent magnets 31c and the permanent magnets 32c are provided such that they are on the same straight line radially extending from the center of rotation.

Further, the left and right soft magnetic material elements 33d and 33e are arranged such that they are circumferentially displaced from each other by half of the pitch. Furthermore, the permanent magnets 31c are arranged such that the magnetic poles there are different in polarity between each adjacent two thereof, and the permanent magnets 32c as well are arranged such that the magnetic poles thereof are different in polarity between each adjacent two of them. In addition to that, the permanent magnets 31c, the permanent magnets 32c, the left soft magnetic material elements 33d, and the right soft magnetic material elements 33e are formed such that surfaces thereof opposed to each other have approximately the same area and shape.

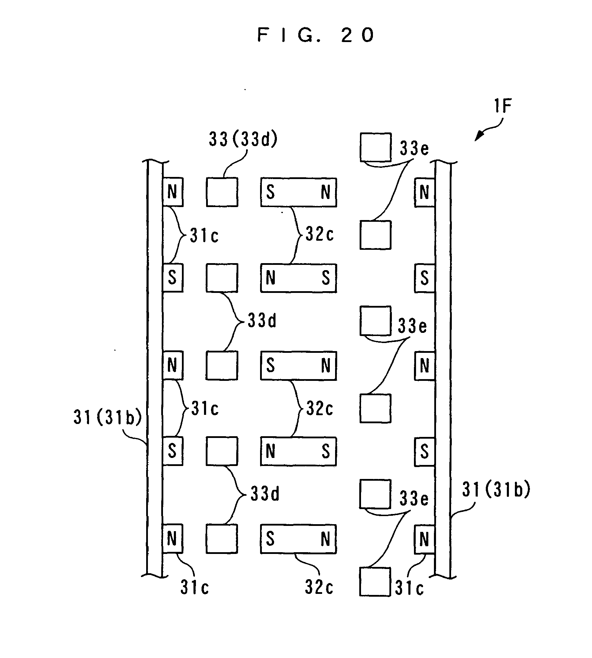

Here, since the two permanent magnets 32c and 32c, and the two rings 32d and 32d, shown in FIG. 19, are actually one member, the arrangement shown in FIG. 19 can be regarded as one corresponding to the arrangement shown in FIG. 20. As is apparent from comparison between FIG. 20 and FIG. 3, referred to hereinabove, the permanent magnets 31c, the left soft magnetic material elements 33d, the permanent magnets 32c, the right soft magnetic material elements 33e, and the permanent magnets 31c are arranged in a relative positional relationship equivalent to the above-described relative positional relationship between the left permanent magnets 11c, the left soft magnetic material elements 13d, the permanent magnets 12c, the right soft magnetic material elements 13e, and the right permanent magnets 11c.

Therefore, in the magnetic power transmission system 1F, the small-diameter rotor 31 corresponds to the aforementioned outer rotor 11, the large-diameter rotor 32 to the inner rotor 12, and the intermediate-diameter rotor 33 to the intermediate rotor 13, whereby the same torque-transmitting operation as executed by the three rotors 11 to 13 according to the first embodiment can be executed by the three rotors 31 to 33.

As described above, according to the magnetic power transmission system 1F of the fourth embodiment, it is possible to obtain the same advantageous effects as provided by the magnetic power transmission system 1 according to the first embodiment. More specifically, it is possible to execute the same power-transmitting operation as carried out by the planetary gear unit, using the magnetic forces. Further, compared with the conventional magnetic power transmission system which forms magnetic paths using only part of magnetic poles, it is possible to improve the torque transmitting efficiency and the torque transmitting capacity, while maintaining the advantageous effects obtained by performing power transmission via magnetic forces. In addition to that, the three rotors 31 to 33 are radially arranged side by side, whereby the magnetic power transmission system 1F can be made more compact in axial size than the magnetic power transmission system 1 in which the three rotors 11 to 13 are arranged side by side in the axial direction.

Next, a magnetic power transmission system 1G according to a fifth embodiment of the present invention will be described with reference to FIG. 21 and FIG. 22. As shown in the figures, this magnetic power transmission system 1G is applied to the differential of the drive system for the vehicle 2, similarly to the magnetic power transmission system 1 according to the first embodiment. The magnetic power transmission system 1G includes a left rotor 41, a right rotor 42, and an intermediate rotor 43, and the three rotors 41 to 43 are supported by a large number of radial bearings and thrust bearings (none of which are shown in the figures), such that they are hardly changed in the mutual positional relationships in the direction of the rotational axis and the radial direction, and are arranged such that they are rotatable about the same rotational axis relative to each other.

The left rotor 41 includes a rotating shaft 41a connected to the drive shaft 5, and a turntable 41b integrally formed with a right end of the rotating shaft 41a. The turntable 41b is made of a soft magnetic material, and has a permanent magnet row formed on a right side surface thereof at a location toward an outer periphery thereof along the circumferential direction. The permanent magnet row is comprised of m permanent magnets 41c, which are arranged, as described hereinafter.

The right rotor 42 includes a rotating shaft 42a concentric with the rotating shaft 41a of the left rotor 41 and connected to the drive shaft 5, and a turntable 42b integrally formed with a left end of the rotating shaft 42a. The turntable 42b is made of a soft magnetic material, and has a permanent magnet row formed on a right side surface thereof at a location toward an outer periphery thereof along the circumferential direction. The permanent magnet row is comprised of m permanent magnets 42c, which are arranged, as described hereinafter.

It should be noted that in the present embodiment, one of the left and right rotors 41 and 42 corresponds to the first, third, and seventh movable members, and the other to the second, fourth, and eighth movable members. Further, one of the permanent magnet 41c and the permanent magnet 42c corresponds to the first and third magnetic poles, and the other to the second and fourth magnetic poles.

On the other hand, the intermediate rotor 43 includes a hollow cylindrical casing portion 43a, hollow shafts 43b and 43b which are integrally formed with the left and right sides of the casing portion 43a, and rotatably fitted on the rotating shafts 41a and 42a, respectively, a gear 43c which is integrally formed with the casing portion 43a and is in constant mesh with the output gear 4e of the automatic transmission 4, an annular protruding portion 43f protruding from an inner wall surface of the casing portion 43a, and outer and inner soft magnetic material element rows formed on the protruding portion 43f. The outer and inner soft magnetic material element rows are comprised of m outer soft magnetic material elements 43d circumferentially disposed side by side and m inner soft magnetic material elements 43e circumferentially disposed side by side, and the outer and inner soft magnetic material elements 43d and 43e are arranged, as described hereinafter.

It should be noted that in the present embodiment, the intermediate rotor 43 corresponds to the fifth, sixth, and ninth movable members, while one of each outer soft magnetic material elements 43d and each inner soft magnetic material element 43e corresponds to the first soft magnetic material element, and the other to the second soft magnetic material element.

FIG. 23 is a planar development view of part of a cross-section of the FIG. 22 magnetic power transmission system taken on lines G-G, and G'-G' of FIG. 22 along the circumferential direction. In the figure, hatching of cross-sectional portions is omitted for ease of understanding. As shown in the figure, each adjacent two of the permanent magnets 41c, the permanent magnets 42c, the outer soft magnetic material elements 43d, and the inner soft magnetic material elements 43e are circumferentially arranged at the same pitch, and the permanent magnets 41c and the permanent magnets 42c are provided at respective locations where they are opposed to each other.

Further, the outer soft magnetic material elements 43d and the inner soft magnetic material elements 43e are arranged such that they are circumferentially displaced from each other by half of the pitch. Furthermore, the permanent magnets 42c are arranged such that the magnetic poles thereof are different in polarity between each adjacent two of them. In addition to that, the permanent magnets 41c, the permanent magnets 42c, the outer soft magnetic material elements 43d, and the inner soft magnetic material elements 43e are formed such that surfaces thereof opposed to each other have approximately the same area and shape.

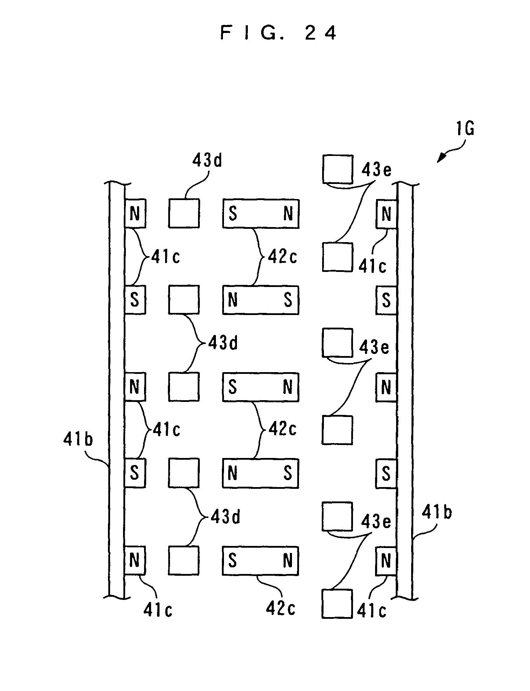

On the other hand, since the two permanent magnets 41c and 41c and the two turntables 42b and 42b, shown in FIG. 23, are actually one member, the arrangement shown in FIG. 23 can be regarded as one corresponding to the arrangement shown in FIG. 24. As is apparent from comparison between FIG. 24 and FIG. 3, referred to hereinabove, the permanent magnets 41c, the outer soft magnetic material elements 43d, the permanent magnets 42c, the inner soft magnetic material elements 43e, and the permanent magnets 41c are arranged in a relative positional relationship equivalent to the above-described relative positional relationship between the left permanent magnets 11c, the left soft magnetic material elements 13d, the permanent magnets 12c, the right soft magnetic material elements 13e, and the right permanent magnets 11c.

Therefore, in the magnetic power transmission system 1G, the left rotor 41 corresponds to the aforementioned outer rotor 11, the right rotor 42 to the inner rotor 12, and the intermediate rotor 43 to the intermediate rotor 13, whereby the same torque-transmitting operation as executed by the three rotors 11 to 13 according to the first embodiment can be executed by the three rotors 41 to 43.

As described above, according to the magnetic power transmission system 1G of the fifth embodiment, it is possible to obtain the same advantageous effects as provided by the magnetic power transmission system 1 according to the first embodiment. In addition to that, the axial sizes of the three rotors 41 to 43 can be made more compact than those of the three rotors 11 to 13 in the first embodiment, whereby the axial size of the whole system can be made compact.

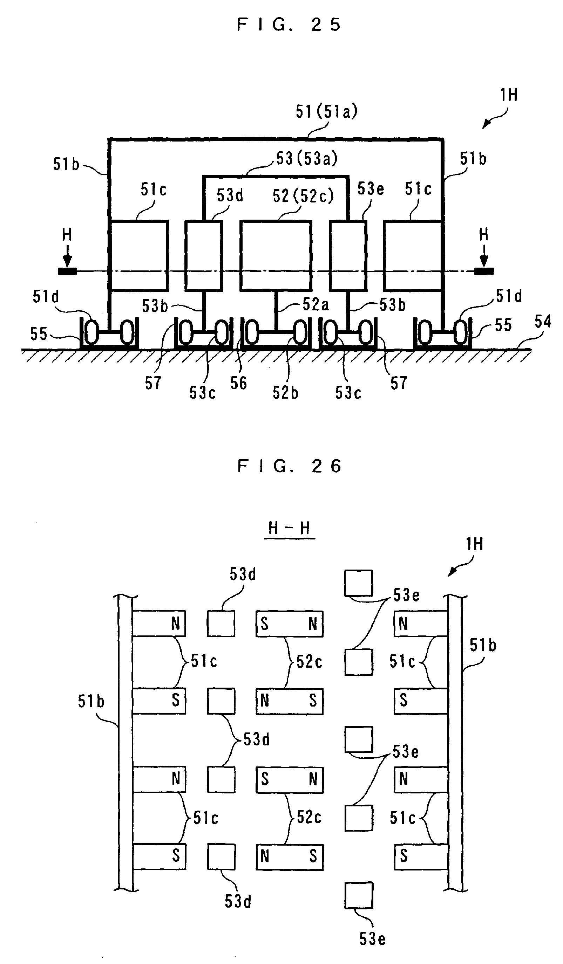

Next, a magnetic power transmission system 1H according to a sixth embodiment of the present invention will be described with reference to FIG. 25 and FIG. 26. FIG. 26 shows a cross-section of the magnetic power transmission system taken on line H-H of FIG. 25. In the figure, hatching of cross-section portions is omitted for ease of understanding. This magnetic power transmission system 1H is provided for transmitting a driving force acting toward the viewer or away from the viewer, as viewed in FIG. 25 (hereinafter referred to as "the front-rear direction") in the same direction or the opposite direction, and includes an outer slider 51, an inner slider 52, and an intermediate slider 53.

The outer slider 51 is made of a soft magnetic material element, and includes a flat top wall 51a extending in the front-rear direction, and left and right side walls 51b and 51b extending downward from opposite ends of the top wall 51a. Left and right permanent magnet rows are formed on inner surfaces of the side walls 51b and 51b in a manner extending in the front-rear direction. The left and right permanent magnet rows are comprised of a predetermined number of symmetrically arranged left permanent magnets 51c and a predetermined number of symmetrically arranged right permanent magnets 51c. As shown in FIG. 26, these permanent magnets 51c are arranged at predetermined intervals in the front-rear direction such that the magnetic poles on the opposite sides of the permanent magnets 51c are different in polarity between each adjacent two of them.

Further, a plurality of rollers 51d (only one is shown) are amounted to a lower end of each side wall 51b. The rollers 51d are accommodated within a guide rail 55 which is placed on a floor 54 and extends in the front-rear direction. With the above arrangement, when the driving force acts on the outer slider 51 in the front-rear direction, the plurality of rollers 51d roll while being guided by the guide rail 55, whereby the outer slider 51 moves in the front-rear direction.

Further, the inner slider 52 includes a body 52a extending in the front-rear direction along the side walls 51b and 51b of the outer slider, a plurality of rollers 52b (only one of which is shown) amounted to a lower end of the body 52a, and a permanent magnet row formed on an upper end of the body 52a. The permanent magnet row is comprised of a predetermined number of permanent magnets 52c. The permanent magnets 52c are arranged at the same intervals as the permanent magnets 51c in the front-rear direction, such that the magnetic poles thereof are different in polarity between each adjacent two of them.

On the other hand, the rollers 52b are accommodated within a guide rail 56 which is placed on the floor 54 and extends in the front-rear direction. With the above arrangement, when the driving force acts on the inner slider 52 in the front-rear direction, the plurality of rollers 52b roll while being guided by the guide rail 56, whereby the inner slider 52 moves in the front-rear direction.

It should be noted that in the present embodiment, one of the outer and inner sliders 51 and 52 corresponds to the first, third, and seventh movable members, and the other to the second, fifth, and eighth movable members. Further, either the left and right permanent magnets 51c or the permanent magnets 52c correspond to the first and third magnetic poles, and the other to the second and fifth magnetic poles.

On the other hand, the intermediate slider 53 includes a flat top wall 53a extending in the front-rear direction, and left and right side walls 53b and 53b extending downward from opposite ends of the top wall 53a. A plurality of rollers 53c (only one of which is shown) are mounted to a lower end of each side wall 53b. The rollers 53c are accommodated within a guide rail 57 which is placed on the floor 54 and extends in the front-rear direction. With the above arrangement, when the driving force acts on the intermediate slider 53 in the front-rear direction, the plurality of rollers 53c roll while being guided by the guide rail 57, whereby the intermediate slider 53 moves in the front-rear direction.

Further, a left soft magnetic material element row is formed at the center of the left side wall in a manner extending in the front-rear direction. The left soft magnetic material element row is comprised of a predetermined number of left soft magnetic material elements 53d. As shown in FIG. 26, the left soft magnetic material elements 53d are arranged at the same intervals as the permanent magnets 51c and 52c, in the front-rear direction. Furthermore, a right soft magnetic material element row is formed at the center of the right side wall in a manner extending in the front-rear direction. The right soft magnetic material element row is comprised of a predetermined number of right soft magnetic material elements 53e. The right soft magnetic material elements 53e are arranged at the same intervals as the permanent magnets 51c and 52c, such that they are displaced from the left soft magnetic material elements 53d by half of the pitch in the front-rear direction.

It should be noted that in the present embodiment, the intermediate slider 53 corresponds to the fifth, sixth, and ninth movable members, while one of each left soft magnetic material element 53d and each right soft magnetic material element 53e corresponds to the first soft magnetic material element, and the other to the second soft magnetic material element.

Further, in the magnetic power transmission system 1H, when the driving force is transmitted to any one of the outer slider 51, the inner slider 52, and the intermediate slider 53, the number of either of the left and right permanent magnets 51c and 51c, the left and right soft magnetic material elements 53d and 53e, or the permanent magnets 52c, of the slider to which the driving force is transmitted, is set to a value smaller than the numbers of the others.

The magnetic power transmission system 1H according to the sixth embodiment is arranged as described above. As is apparent from comparison between FIG. 26 and FIG. 3, referred to hereinabove, the permanent magnets 51c, the left soft magnetic material elements 53d, the permanent magnets 52c, the right soft magnetic material elements 53e, and the permanent magnets 51c are arranged in a relative positional relationship equivalent to the above-described relative positional relationship between the permanent magnets 11c, the left soft magnetic material elements 13d, the permanent magnets 12c, the right soft magnetic material elements 13e, and the permanent magnets 11c.

Therefore, in the magnetic power transmission system 1H, the driving force acting in the front-rear direction can be transmitted between the three sliders 51 to 53 by magnetic lines of force generated between the permanent magnets 51c, the left soft magnetic material elements 53d, the permanent magnets 52c, the right soft magnetic material elements 53e, and the permanent magnets 51c. For example, when the outer slider 51 is fixed, and the driving force is input to the inner slider 52, it is possible to drive the intermediate slider 53 in the same direction at half of the speed of the inner slider 52, and transmit a driving force twice as large as a value input to the inner slider 52 to the intermediate slider 53.

As described hereinabove, according to the magnetic power transmission system 1H of the sixth embodiment, it is possible to transmit a driving force input to any one of the three sliders 51 to 53, as a driving force linearly acting on both or one of the other two sliders, by magnetic forces. In doing this, magnetic circuits are formed by using all of either the left and right permanent magnets 51c and 51c, the left and right soft magnetic material elements 53d and 53e, or the permanent magnets 52c, of a slider to which the driving force is input, and hence it is possible to efficiently secure the areas of magnetic paths. As a result, compared with the conventional magnetic power transmission system which forms magnetic paths using only part of magnetic poles, it is possible to improve the power transmission efficiency and the power transmitting capacity, while maintaining the advantageous effects obtained by performing power transmission via magnetic forces.

In addition to that, the magnetic power transmission system 1H can be realized using a relatively simple arrangement of the intermediate slider 53 which is provided with the outer slider 51 including left and right permanent magnet rows, the inner slider 52 including the permanent magnet row, and the intermediate slider 53 including left and right soft magnetic material element rows.

It should be noted that although the magnetic power transmission systems according to the above-described embodiments are all examples in which permanent magnets are used for magnetic poles, this is not limitative, but the magnetic power transmission system according to the present invention may be arranged to employ electromagnets for magnetic poles.

### [Industrial Applicability]

As described above, the magnetic power transmission system according to the present invention is useful in improving the power transmission efficiency and the power transmitting capacity while maintaining the advantageous effects of performing power transmission via magnetic forces, and is useful in reducing manufacturing costs.

## Claims

1. A magnetic power transmission system (1) comprising:
a first movable member (11,12,21,22,31,32,41,42,51,52) including a first magnetic pole row (11c, 12c, 21c, 22c, 31c, 32c, 41c, 42c, 51c, 52c) which is formed by a plurality of first magnetic poles arranged at approximately equal intervals in a predetermined direction, each adjacent two of said first magnetic poles having polarities different from each other, said first movable member (11, 12, 21, 22, 31, 32, 41, 42, 51, 52) being movable along the predetermined direction;
a second movable member (11, 12, 21, 22, 31, 32, 41, 42, 51, 52) including a second magnetic pole row (11c, 12c, 2 1 c, 22c, 31c, 32c, 4 1 c, 42c, 51c, 52c) which is formed by a plurality of second magnetic poles arranged at approximately equal intervals in the predetermined direction, each adjacent two of said second magnetic poles having polarities different from each other, and is arranged in a manner opposed to said first magnetic pole row, said second movable member (11, 12, 21, 22, 31, 32, 41, 42, 51, 52) being relatively movable with respect to said first movable member (11, 12, 21, 22, 31, 32, 41, 42, 51, 52) along the predetermined direction;
a third movable member (11, 12, 21, 22, 31, 32, 41, 42, 51, 52) including a third magnetic pole row (11c, 12c, 21c, 22c, 31c, 32c, 41c, 42c, 51c, 52c) which is formed by a plurality of third magnetic poles arranged at approximately equal intervals in the predetermined direction, each adjacent two of said third magnetic poles having polarities different from each other, said third movable member (11, 12, 21, 22, 31, 32, 41, 42, 51, 52) moving relative to said first movable member (11,12, 21,22, 31, 32, 41, 42, 51, 52) in an interlocked manner to thereby move along the predetermined direction;
a fourth movable member (11,12,21,22, 31, 32, 41, 42, 51, 52) including a fourth magnetic pole row (11c, 12c, 21 c, 22c, 31c, 32c, 41 c, 42c, 51 c, 52c) which is formed by a plurality of fourth magnetic poles arranged at approximately equal intervals in the predetermined direction, each adjacent two of said fourth magnetic poles having polarities different from each other, and is arranged in a manner opposed to said third magnetic pole row, said fourth movable member (11, 12,21,22,31,32, 41, 42, 51, 52) moving relative to said second movable member (11,12,21,22, 31, 32, 41, 42, 51, 52) in an interlocked manner to thereby move along the predetermined direction;
a fifth movable member (13, 23, 33, 43, 53) including a first soft magnetic material element row which is formed by a plurality of first soft magnetic material elements (13d, 23d, 33d, 53d, 43d, 13e, 23e, 33e, 53e, 43e) arranged at approximately equal intervals in the predetermined direction, and is arranged between said first magnetic pole row and said second magnetic pole row, said fifth movable member (13, 23, 33, 43, 53) being arranged in a manner relatively movable with respect to said first movable member (11, 12, 21, 22, 31, 32, 41, 42, 51, 52) and said second movable member (11, 12,21,22,31,32,41,42,51,52) along the predetermined direction; and
a sixth movable member (13, 23, 33, 43, 53) including a second soft magnetic material element row which is formed by a plurality of second soft magnetic material elements (13e, 23e, 33e, 53e, 43e, 13d, 23d, 33d, 53d, 43d) arranged at approximately equal intervals in the predetermined direction, and is arranged between said third magnetic pole row and said fourth magnetic pole row, said sixth movable member (13, 23, 33, 43, 53) moving relative to said fifth movable member (13, 23, 33, 43, 53) in an interlocked manner to thereby move along the predetermined direction,
wherein when each said first magnetic pole and each said second magnetic pole are in a first opposed position opposed to each other, each said third magnetic pole and each said fourth magnetic pole are in a second opposed position opposed to each other; wherein when each said first magnetic pole and each said second magnetic pole in the first opposed position have polarities different from each other, each said third magnetic pole and each said fourth magnetic pole in the second opposed position have polarities identical to each other; when each said first magnetic pole and each said second magnetic pole in the first opposed position have polarities identical to each other, each said third magnetic pole and each said fourth magnetic pole in the second opposed position have polarities different from each other; and
wherein when each said first magnetic pole and each said second magnetic pole are in the first opposed position, if each said first soft magnetic material element is in a position between said first magnetic pole and said second magnetic pole, each said second soft magnetic material element is in a position between two pairs of said third magnetic poles and said fourth magnetic poles adjacent to each other in the predetermined direction, and if each said second soft magnetic material element is in a position between said third magnetic pole and said fourth magnetic pole, each said first soft magnetic material element is in a position between two pairs of said first magnetic poles and said second magnetic poles which are adjacent to each other in the predetermined direction.

2. A magnetic power transmission system (1) as claimed in claim 1, wherein said first movable member (11,12,21, 22, 31, 32, 41, 42, 51, 52) and said third movable member (11,12, 21,22, 31, 32,41, 42, 51, 52) are integrally formed with each other as a seventh movable member (11,12, 31, 32, 41, 42, 51, 52), said second movable member (11, 12, 21, 22, 31, 32, 41, 42, 51, 52) and said fourth movable member (11, 12, 21, 22, 31, 32, 41, 42, 51, 52) being integrally formed with each other as an eighth movable member, said fifth movable member (12, 32, 42, 52) and said sixth movable member (13, 23, 33, 43, 53) being integrally formed with each other as a ninth movable member (13, 33,43, 53).

3. A magnetic power transmission system (1) as claimed in claim 2, wherein said seventh (11, 12, 31, 32, 41, 42, 51, 52) to ninth movable members (13, 33, 43, 53) are formed by three sliders (51, 52, 53) relatively slidable with respect to each other, respectively.

4. A magnetic power transmission system (1) as claimed in any one of claims 2, wherein said seventh (11, 12, 31, 32, 41, 42, 51, 52) to ninth movable members (13, 33, 43, 53) are formed by three concentric rotors (11, 12, 13, 31, 32, 33, 41, 42, 43) rotatable relative to each other, respectively, said plurality of first to fourth magnetic poles and said plurality of first and second soft magnetic material elements being set to be equal in number to each other.

5. A magnetic power transmission system (1) as claimed in any one of claims 2 to 4, wherein one of said seventh (11, 12, 31, 32, 41, 42, 51, 52) to ninth movable members (13, 33, 43, 53) is arranged to be immovable.

6. A magnetic power transmission system (1) as claimed in any one of claims 2 to 5, further comprising a magnetic force-changing device (17, 18) for changing magnetic forces acting on said seventh (11, 12, 31, 32, 41, 42, 51, 52) to ninth movable members (13, 33, 43, 53).

## Patentansprüche

1. Magnetkraft-Übertragungssystem (1), umfassend:
ein erstes bewegbares Element (11, 12, 21, 22, 31, 32, 41, 42, 51, 52), welches eine erste Magnetpolreihe (11c, 12c, 21c, 22c, 31c, 32c, 41c, 42c, 51c, 52c) enthält, welche durch eine Vielzahl von ersten Magnetpolen gebildet ist, welche in ungefähr gleichen Intervallen in einer vorbestimmten Richtung angeordnet sind, wobei jede angrenzenden zwei von den ersten Magnetpolen Polaritäten aufweisen, welche unterschiedlich zueinander sind, wobei das erste bewegbare Element (11, 12, 21, 22, 31, 32, 41, 42, 51, 52) entlang der vorbestimmten Richtung bewegbar ist;
ein zweites bewegbares Element (11, 12, 21, 22, 31, 32, 41, 42, 51, 52), welches eine zweite Magnetpolreihe (11c, 12c, 21c, 22c, 31c, 32c, 41c, 42c, 51c, 52c) enthält, welche durch eine Vielzahl von zweiten Magnetpolen gebildet ist, welche in ungefähr gleichen Intervallen in einer vorbestimmten Richtung angeordnet sind, wobei jede angrenzenden zwei von den zweiten Magnetpolen Polaritäten aufweisen, welche unterschiedlich zueinander sind, und welche auf eine Weise gegenüberliegend zu der ersten Magnetpolreihe angeordnet ist, wobei das zweite bewegbare Element (11, 12, 21, 22, 31, 32, 41, 42, 51, 52) relativ hinsichtlich des ersten bewegbaren Elements (11, 12, 21, 22, 31, 32, 41, 42, 51, 52) entlang der vorbestimmten Richtung bewegbar ist;
ein drittes bewegbares Element (11, 12, 21, 22, 31, 32, 41, 42, 51, 52), welches eine dritte Magnetpolreihe (11c, 12c, 21c, 22c, 31c, 32c, 41c, 42c, 51c, 52c) enthält, welche durch eine Vielzahl von dritten Magnetpolen gebildet ist, welche in ungefähr gleichen Intervallen in einer vorbestimmten Richtung angeordnet sind, wobei jede angrenzenden zwei von den dritten Magnetpolen Polaritäten aufweisen, welche unterschiedlich zueinander sind, wobei das dritte bewegbare Element (11, 12, 21, 22, 31, 32, 41, 42, 51, 52) sich relativ zu dem ersten bewegbaren Element (11, 12, 21, 22, 31, 32, 41, 42, 51, 52) in einer verriegelten Weise bewegt, um sich **dadurch** entlang der vorbestimmten Richtung zu bewegen;
ein viertes bewegbares Element (11, 12, 21, 22, 31, 32, 41, 42, 51, 52), welches eine vierte Magnetpolreihe (11c, 12c, 21 c, 22c, 31c, 32c, 41c, 42c, 51c, 52c) enthält, welche durch eine Vielzahl von vierten Magnetpolen gebildet ist, welche in ungefähr gleichen Intervallen in einer vorbestimmten Richtung angeordnet sind, wobei jede angrenzenden zwei von den vierten Magnetpolen Polaritäten aufweisen, welche unterschiedlich zueinander sind, und welche auf eine Weise entgegengesetzt zu der dritten Magnetpolreihe angeordnet ist, wobei das vierte bewegbare Element (11, 12, 21, 22, 31, 32, 41, 42, 51, 52) sich relativ zu dem zweiten bewegbaren Element (11, 12, 21, 22, 31, 32, 41, 42, 51, 52) in einer verriegelten Weise bewegt, um sich **dadurch** entlang der vorbestimmten Richtung zu bewegen;
ein fünftes bewegbares Element (13, 23, 33, 43, 53), welches eine erste Elementreihe aus weichmagnetischem Material enthält, welche durch eine Vielzahl von Elementen aus weichmagnetischem Material (13d, 23d, 33d, 53d, 43d, 13e, 23e, 33e, 53e, 43e) gebildet ist, welche in ungefähr gleichen Intervallen in der vorbestimmten Richtung angeordnet sind, und welche zwischen der ersten Magnetpolreihe und der zweiten Magnetpolreihe angeordnet ist, wobei das fünfte bewegbare Element (13, 23, 33, 43, 53) auf eine Weise relativ bewegbar hinsichtlich des ersten bewegbaren Elements (11,12, 21, 22, 31, 32,41, 42, 51, 52) und des zweiten bewegbaren Elements (11, 12, 21, 22, 31, 32, 41, 42, 51, 52) entlang der vorbestimmten Richtung angeordnet ist; und
ein sechstes bewegbares Element (13, 23, 33, 43, 53), welches eine zweite Elementreihe aus weichmagnetischem Material enthält, welches durch eine Vielzahl von zweiten Elementen aus weichmagnetischem Material (13e, 23e, 33e, 53e, 43e, 13d, 23d, 33d, 53d, 43d) gebildet ist, welche in ungefähr gleichen Intervallen in der vorbestimmten Richtung angeordnet sind, und welche zwischen der dritten Magnetpolreihe und der vierten Magnetpolreihe angeordnet ist, wobei das sechste bewegbare Element (13, 23, 33, 43, 53) sich relativ zu dem fünften bewegbaren Element (13, 23, 33, 43, 53) in einer verriegelten Weise bewegt, um sich **dadurch** entlang der vorbestimmten Richtung zu bewegen,
wobei, wenn jeder erste Magnetpol und jeder zweite Magnetpol in einer ersten gegenüberliegenden Position gegenüberliegend zueinander sind, jeder dritte Magnetpol und jeder vierte Magnetpol in einer zweiten gegenüberliegenden Position gegenüberliegend zueinander sind; wobei, wenn jeder erste Magnetpol und jeder zweite Magnetpol in der ersten gegenüberliegenden Position Polaritäten aufweisen, welche unterschiedlich zueinander sind, wobei jeder dritte Magnetpol und jeder vierte Magnetpol in der zweiten gegenüberliegenden Position Polaritäten aufweisen, welche identisch zueinander sind; wenn jeder erste Magnetpol und jeder zweite Magnetpol in der ersten gegenüberliegenden Position Polaritäten aufweisen, welche identisch zueinander sind, jeder dritte Magnetpol und jeder vierte Magnetpol in der zweiten gegenüberliegenden Position Polaritäten aufweisen, welche unterschiedlich zueinander sind; und
wenn jeder erste Magnetpol und jeder zweite Magnetpol in der ersten gegenüberliegenden Position sind, falls jedes erste Element aus weichmagnetischem Material in einer Position zwischen dem ersten Magnetpol und dem zweiten Magnetpol ist, jedes zweite Element aus weichmagnetischem Material in einer Position zwischen zwei Paaren von den dritten Magnetpolen und den vierten Magnetpolen angrenzend zueinander in der vorbestimmten Richtung ist, und falls jedes zweite Element aus weichmagnetischem Material in einer Position zwischen dem dritten Magnetpol und dem vierten Magnetpol ist, jedes von dem ersten Element aus weichmagnetischem Material in einer Position zwischen zwei Paaren von ersten Magnetpolen und zweiten Magnetpolen ist, welche angrenzend zueinander in der vorbestimmten Richtung sind.

2. Magnetkraftübertragungssystem (1) wie in Anspruch 1 beansprucht, wobei das erste bewegbare Element (11, 12, 21, 22, 31, 32,41, 42, 51, 52) und das dritte bewegbare Element (11, 12, 21, 22, 31, 32, 41, 42, 51, 52) integral miteinander als ein siebtes bewegbares Element (11, 12, 31, 32,41,42, 51, 52) gebildet sind, wobei das zweite bewegbare Element (11, 12, 21, 22, 31, 32, 41, 42, 51, 52) und das vierte bewegbare Element (11, 12, 21, 22, 31, 32, 41, 42, 51, 52) integral miteinander als ein achtes bewegbares Element gebildet sind, wobei das fünfte bewegbare Element (12, 32, 42, 52) und das sechste bewegbare Element (13, 23, 33, 43, 53) integral miteinander als ein neuntes bewegbares Element (13, 33, 43, 53) gebildet sind.

3. Magnetkraftübertragungssystem (1) wie in Anspruch 2 beansprucht, wobei siebtes (11, 12, 31, 32, 41, 42, 51, 52) bis neuntes bewegbares Element (13, 33, 43, 53) durch drei Schieber (51, 52, 53) gebildet sind, welche jeweils hinsichtlich zueinander relativ verschiebbar sind.

4. Magnetkraftübertragungssystem (1) wie in irgendeinem der Ansprüche 2 beansprucht, wobei siebtes (11,12, 31, 32, 41, 42, 51, 52) bis neuntes bewegbares Element (13, 33, 43, 53) durch drei konzentrische Rotoren (11, 12, 13, 31, 32, 33, 41, 42, 43) gebildet sind, welche jeweils relativ zueinander drehbar sind, wobei die Vielzahl von ersten bis vierten Magnetpolen und die Vielzahl von ersten und zweiten Elementen aus weichmagnetischem Material eingestellt sind, um in der Anzahl gleich zueinander zu sein.

5. Magnetkraftübertragungssystem (1) wie in irgendeinem der Ansprüche 2 bis 4 beansprucht, wobei eines von siebtem (11, 12, 31, 32, 41, 42, 51, 52) bis neuntem bewegbaren Element (13, 33, 43, 53) angeordnet ist, um nicht bewegbar zu sein.

6. Magnetkraftübertragungssystem (1) wie in irgendeinem der Ansprüche 2 bis 5 beansprucht, weiterhin eine Magnetkraftänderungsvorrichtung (17, 18) umfassend zum Ändern der Magnetkräfte, welche auf siebtes (11, 12, 31, 32, 41, 42, 51, 52) bis neuntes Element (13, 33, 43, 53) wirkt.

## Revendications

1. Système de transmission de puissance magnétique (1), comprenant :
un premier organe mobile (11, 12, 21, 22, 31, 32, 41, 42, 51, 52), incluant une première rangée de pôles magnétiques (11c, 12c, 21c, 22c, 31c, 32c, 41c, 42c, 51c, 52c), formée par une pluralité de premiers pôles magnétiques agencés selon des intervalles à peu près égaux dans une direction prédéterminée, chaque paire desdits premiers pôles magnétiques adjacents ayant des polarités différentes les unes des autres, ledit premier organe mobile (11, 12, 21, 22, 31, 32, 41, 42, 51, 52) étant déplaçable le long de la direction prédéterminée,
un deuxième organe mobile (11, 12, 21, 22, 31, 32, 41, 42, 51, 52), incluant une deuxième rangée de pôles magnétiques (11c, 12c, 21c, 22c, 31c, 32c, 41c, 42c, 51c, 52c), formée par une pluralité de deuxièmes pôles magnétiques agencés selon des intervalles à peu près égaux dans la direction prédéterminée, chaque paire desdits deuxièmes pôles magnétiques adjacents ayant des polarités différentes les unes des autres, et étant agencée d'une manière opposée à ladite première rangée de pôles magnétiques, ledit deuxième organe mobile (11, 12, 21, 22, 31, 32, 41, 42, 51, 52) étant déplaçable par rapport audit premier organe mobile (11, 12, 21, 22, 31, 32, 41, 42, 51, 52), le long de la direction prédéterminée,
un troisième organe mobile (11, 12, 21, 22, 31, 32, 41, 42, 51, 52), incluant une troisième rangée de pôles magnétiques (11c, 12c, 21c, 22c, 31c, 32c, 41c, 42c, 51c, 52c), formée par une pluralité de troisièmes pôles magnétiques agencés selon des intervalles à peu près égaux dans la direction prédéterminée, chaque paire desdits troisièmes pôles magnétiques adjacents ayant des polarités différentes les unes des autres, ledit troisième organe mobile (11, 12, 21, 22, 31, 32, 41, 42, 51, 52) étant déplaçable par rapport audit premier organe mobile (11, 12, 21, 22, 31, 32, 41, 42, 51, 52), de manière verrouillée réciproquement, pour de cette manière se déplacer le long de la direction prédéterminée,
un quatrième organe mobile (11, 12, 21, 22, 31, 32, 41, 42, 51, 52), incluant une quatrième rangée de pôles magnétiques (11c, 12c, 21c, 22c, 31c, 32c, 41c, 42c, 51c, 52c), formée par une pluralité de quatrièmes pôles magnétiques agencés selon des intervalles à peu près égaux dans la direction prédéterminée, chaque paire desdits quatrièmes pôles magnétiques adjacents ayant des polarités différentes les unes des autres, et étant agencée d'une manière opposée à ladite troisième rangée de pôles magnétiques, ledit quatrième organe mobile (11, 12, 21, 22, 31, 32, 41, 42, 51, 52) étant déplaçable par rapport audit deuxième organe mobile (11, 12, 21, 22, 31, 32, 41, 42, 51, 52), de manière verrouillée réciproquement, pour de cette manière se déplacer le long de la direction prédéterminée,
un cinquième organe mobile (13, 23, 33, 43, 53), incluant une première rangée d'éléments en matériau magnétiquement doux, formée par une pluralité de premiers éléments (13d, 23d, 33d, 53d, 43d, 13e, 23e, 33e, 53e, 43e) en matériau magnétiquement doux, agencés selon des intervalles à peu près égaux dans la direction prédéterminée, et agencée entre ladite première rangée de pôles magnétiques et ladite deuxième rangée de pôles magnétiques, ledit cinquième organe mobile (13, 23, 33, 43, 53) étant agencé de manière déplaçable par rapport audit premier organe mobile (11, 12, 21, 22, 31, 32, 41, 42, 51, 52) et audit deuxième organe mobile (11, 12, 21, 22, 31, 32, 41, 42, 51, 52), dans la direction prédéterminée ; et
un sixième organe mobile (13, 23, 33, 43, 53), incluant une deuxième rangée d'éléments en matériau magnétiquement doux, formée par une pluralité de deuxièmes éléments (13e, 23e, 33e, 53e, 43e, 13d, 23d, 33d, 53d, 43d) en matériau magnétiquement doux, agencés selon des intervalles à peu près égaux dans la direction prédéterminée, et agencée entre ladite troisième rangée de pôles magnétiques et ladite quatrième rangée de pôles magnétiques, ledit sixième organe mobile (13, 23, 33, 43, 53) étant déplaçable par rapport audit cinquième organe mobile (13, 23, 33, 43, 53), de manière verrouillée réciproquement, pour de cette manière se déplacer le long de la direction prédéterminée,
dans lequel chaque dit premier pôle magnétique et chaque dit deuxième pôle magnétique sont dans une première position opposée, opposés les uns aux autres, chaque dit troisième magnétique et chaque dit quatrième pôle magnétique sont dans une deuxième position opposée, opposés les uns aux autres, dans lequel, lorsque chaque dit premier pôle magnétique et chaque dit deuxième pôle magnétique, situés dans la première position opposée, ont des polarités différentes les unes des autres, chaque dit troisième pôle magnétique et chaque dit quatrième pôle magnétique, situés dans la deuxième position opposée, ont des polarités identiques les unes aux autres ; lorsque chaque dit premier pôle magnétique et chaque dit deuxième pôle magnétique, situés dans la première position opposée, ont des polarités identiques les unes aux autres, chaque dit troisième pôle magnétique et chaque dit quatrième pôle magnétique, situés dans la deuxième position opposée, ont des polarités différentes les unes des autres ; et
dans lequel chaque dit premier pôle magnétique et chaque dit deuxième pôle magnétique sont dans la première position opposée, si chaque dit premier élément en matériau magnétiquement doux se trouve dans une position située entre ledit premier pôle magnétique et ledit deuxième pôle magnétique, chaque dit deuxième élément en matériau magnétiquement doux se trouve dans une position située entre deux paires desdits troisièmes pôles magnétiques et desdits quatrièmes pôles magnétiques, adjacents les uns aux autres dans la direction prédéterminée, et si chaque dit deuxième élément en matériau magnétiquement doux se trouve dans une position située entre ledit troisième pôle magnétique et ledit quatrième pôle magnétique, chaque dit premier élément en matériau magnétiquement doux se trouve dans une position située entre deux paires desdits premiers pôles magnétiques et desdits deuxièmes pôles magnétiques, adjacents les uns aux autres dans la direction prédéterminée.

2. Système de transmission de puissance magnétique (1) selon la revendication 1, dans lequel ledit premier organe mobile (11, 12, 21, 22, 31, 32, 41, 42, 51, 52) et ledit troisième organe mobile (11, 12, 21, 22, 31, 32, 41, 42, 51, 52) sont formés d'une seule pièce l'un avec l'autre, à titre d'un septième organe mobile (11, 12, 21, 22, 31, 32, 41, 42, 51, 52), ledit deuxième organe mobile (11, 12, 21, 22, 31, 32, 41, 42, 51, 52) et ledit quatrième organe mobile (11, 12, 21, 22, 31, 32, 41, 42, 51, 52) sont formés d'une seule pièce l'un avec l'autre, à titre d'un huitième organe mobile, ledit cinquième organe mobile (12, 32, 42, 52) et ledit sixième organe mobile (13, 23, 33, 43, 53) sont formés d'une seule pièce l'un avec l'autre, à titre d'un neuvième organe mobile (13, 33, 43, 53).

3. Système de transmission de puissance magnétique (1) selon la revendication 2, dans lequel lesdits septième (11, 12, 31, 32, 41, 42, 51, 52) à neuvième organes mobiles (13, 23, 33, 43, 53) sont formés par trois coulisseaux (51, 52, 53) susceptibles de coulisser les uns par rapport aux autres, respectivement.

4. Système de transmission de puissance magnétique (1) selon l'une quelconque des revendications 2, dans lequel lesdits septième (11, 12, 31, 32, 41, 42, 51, 52) à neuvième organes mobiles (13, 33, 43, 53) sont formés par trois rotors (11, 12, 13, 31, 32, 33, 41, 42, 43) concentriques, susceptibles de tourner les uns par rapport aux autres, respectivement, ladite pluralité de premiers à quatrièmes pôles magnétiques et ladite pluralité de premiers et deuxièmes éléments en matériau magnétiquement doux étant prévus en nombre identique les uns aux autres.

5. Système de transmission de puissance magnétique (1) selon l'une quelconque des revendications 2 à 4, dans lequel l'un desdits septième (11, 12, 31, 32, 41, 42, 51, 52) à neuvième organes mobiles (13, 33, 43, 53) sont agencés pour être indéplaçables.

6. Système de transmission de puissance magnétique (1) selon l'une quelconque des revendications 2 à 5, comprenant en outre un dispositif de changement de force magnétique (17, 18) pour modifier les forces magnétiques agissant sur lesdits septième (11, 12, 21, 31, 32, 41, 42, 51, 52) à neuvième organes mobiles (13, 33, 43, 53).
